(19) Europäisches Patentamt
European Patent Office
Office européen des brevets

(11) **EP 4 597 027 A1**

(12) **EUROPEAN PATENT APPLICATION**
published in accordance with Art. 153(4) EPC

(43) Date of publication:
06.08.2025  Bulletin 2025/32

(21) Application number: 23872664.0

(22) Date of filing: 27.01.2023

(51) International Patent Classification (IPC):
*G01B 11/24* (2006.01)   *G01B 11/06* (2006.01)
*G01N 21/17* (2006.01)   *G01N 21/64* (2006.01)
*G02B 21/00* (2006.01)

(52) Cooperative Patent Classification (CPC):
G01B 11/06; G01B 11/24; G01N 21/17;
G01N 21/64; G02B 21/00

(86) International application number:
PCT/KR2023/001246

(87) International publication number:
WO 2024/071533 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 KR 20220124335

(71) Applicant: Koh Young Technology Inc.
Seoul 08588 (KR)

(72) Inventors:
• CHOI, Hyoung Su
Seongnam-si Gyeonggi-do 13588 (KR)
• KANG, In Sung
Daejeon 34091 (KR)
• JEON, Moon Young
Seongnam-si Gyeonggi-do 13474 (KR)

(74) Representative: Meissner Bolte Partnerschaft
mbB
Patentanwälte Rechtsanwälte
Postfach 86 06 24
81633 München (DE)

(54) **APPARATUS AND METHOD FOR INSPECTING THREE-DIMENSIONAL SHAPE**

(57)     A three-dimensional shape inspection device according to an embodiment comprises a light emitter including a light source and a spatial light modulator configured to modulate light received from the light source, the light emitter being configured to emit multiple light beams having multiple focal points downward onto a surface of a measurement object; an optical system configured to refract respective modulated light beams at different refractive indices for each of multiple wavelengths based on chromatic aberration, thereby forming a measurement section in a vertical direction in which the light refracted for each wavelength is focused; a beam splitter configured to transmit a part of light reflected from the measurement object and to reflect another part of the light reflected from the measurement object; a first detector configured to detect information on a wavelength of the light transmitted through the beam splitter; and a second detector configured to detect information on a wavelength of the light reflected by the beam splitter, wherein a filter detector, which is one of the first detector and the second detector, comprises a filter unit configured to block light at a specific wavelength or longer, thereby detecting information on light of a wavelength less than the specific wavelength.

FIG. 10

**Description**

TECHNICAL FIELD

The present disclosure relates to a three-dimensional shape inspection device and a three-dimensional shape inspection method.

BACKGROUND

Confocal microscopy or confocal laser scanning microscopy (CLSM) is a type of microscope that removes out-of-focus light using a pinhole. This microscope eliminates optical interference from areas other than the focal point, enabling high resolution and high magnification, and is used in fields such as life sciences, semiconductors, and materials science.
Among confocal microscopes, a chromatic confocal microscope that utilizes chromatic aberration to perform a 3D inspection of a measurement object is known. Chromatic confocal microscopes operate by refracting white light emitted from a light source into multiple wavelengths, each bent at different refractive indices, and emitting the refracted light onto the surface of the measurement object. Inspection is performed by causing a light beam focused on and reflected from the surface of the measurement object among the refracted light beams to pass through a pinhole, and detecting the wavelength of the transmitted light beam via a spectrometer. The chromatic confocal microscope performs a 3D inspection by pre-tabulating the wavelength information of the focused light and the focal length information of the corresponding optical system, and then measuring the height of the measurement object based on the detected light's wavelength information.

SUMMARY

The conventional chromatic confocal microscope performs a 3D inspection by irradiating only one point on the surface of the measurement object with light emitted from a light source and detecting the light reflected from the surface. As a result, only a point scan method or a minute-length line scan method is possible, and therefore, there is a limitation in that the inspection speed is very slow. Embodiments of the present disclosure address the aforementioned issues of the conventional technology.
Furthermore, the conventional chromatic confocal microscope has a limitation in that when a measurement object includes a transparent material, inspection of the measurement object is possible only when prior information on the refractive index of the transparent material is available. In addition, in some cases, inspection may be impossible depending on the shape of specimen of a measurement object that includes a transparent material, leading to a problem where the feasibility of inspection varies depending on the specimen shape. Embodiments of the present disclosure address the aforementioned issues of the conventional technology.
One aspect of the present disclosure provides embodiments of a three-dimensional shape inspection device. A three-dimensional shape inspection device according to a representative embodiment comprises: a light emitter including a light source and a spatial light modulator configured to modulate light received from the light source, the light emitter being configured to emit multiple light beams having multiple focal points downward onto a surface of a measurement object, an optical system configured to refract respective modulated light beams at different refractive indices for each of multiple wavelengths based on chromatic aberration, thereby forming a measurement section in a vertical direction in which the light refracted for each wavelength is focused, a beam splitter configured to transmit a part of light reflected from the measurement object and to reflect another part of the light reflected from the measurement object, a first detector configured to detect information on a wavelength of the light transmitted through the beam splitter and a second detector configured to detect information on a wavelength of the light reflected by the beam splitter, wherein a filter detector, which is one of the first detector and the second detector, comprises a filter unit configured to block light at a specific wavelength or longer, thereby detecting information on light of a wavelength less than the specific wavelength.
In an embodiment, the three-dimensional shape inspection device further comprises a controller configured to measure a height of a base of the measurement object and a height of a transparent material disposed on the base based on information detected by the first detector and information detected by the second detector.
In an embodiment, the filter detector is configured to detect light intensity information.
In an embodiment, the three-dimensional shape inspection device further comprises a focus adjuster configured to change the measurement section by vertically changing the positions where the light beams refracted for each wavelength are focused; and a controller configured to control the focus adjuster to change the measurement section when the determining the light intensity information to be equal to or less than a predetermined first specific intensity.
In an embodiment, the controller is configured to control the focus adjuster to change the measurement section so that light of a shorter wavelength is reflected from the measurement object when determining the light intensity information to be equal to or less than the predetermined first specific intensity.

In an embodiment, the three-dimensional shape inspection device further comprises, a focus adjuster configured to change the measurement section by vertically changing the positions where the light beams refracted for each wavelength are focused; and a controller configured to control the focus adjuster to change the measurement section when determining the light intensity information to be equal to or greater than a predetermined second specific intensity

In an embodiment, the controller is configured to control the focus adjuster to change the measurement section so that light of a longer wavelength is reflected from the measurement object when determining the light intensity information to be equal to or greater than the predetermined second specific intensity.

In an embodiment, the three-dimensional shape inspection device further comprises, a focus adjuster configured to change the measurement section by vertically changing the positions where the light beams refracted for each wavelength are focused; and a controller configured to control the focus adjuster to change the measurement section when the light intensity information satisfies a predetermined criterion, wherein the first detector and the second detector are configured to detect information on the wavelength of light again in a state in which the measurement section is changed

In an embodiment, the controller is configured to : (i) acquire first information detected by a no-filter detector which is one of the first detector and the second detector other than the filter detector, and second information detected by the filter detector in a first state before changing the measurement section; (ii) acquire third information detected by the no-filter detector and fourth information detected by the filter detector in a second state after changing the measurement section; and (iii) measure a height of the base of the measurement object and a height of the transparent material disposed on the base based on the first information, the second information, the third information, and the fourth information.

In an embodiment, when a working distance is defined as a value proportional to an average distance from the optical system to the positions where the light beams refracted for each wavelength are focused, the controller is configured to measure a refractive index of the transparent material based on the working distance in the first state, the working distance in the second state, the first information, and the third information.

In an embodiment, wherein the optical system has unique focal shifts for each wavelength due to chromatic aberration, and wherein, when a working distance is defined as a value proportional to an average distance from the optical system to the positions where the light beams refracted for each wavelength are focused, the controller is configured to measure a refractive index, which is a value obtained by dividing a value obtained by subtracting the working distance in the second state from the working distance in the first state by a value obtained by subtracting a first focal shift corresponding to the first information from a third focal shift corresponding to the third information.

In an embodiment, wherein the controller is configured to measure the height of the base of the measurement object and the height of the transparent material disposed on the base based on the first information, the second information, the third information, the fourth information, and the refractive index.

In an embodiment, wherein the focus adjuster comprises a variable lens configured to change the measurement section based on an applied current, and as the applied current increases, the value obtained by subtracting the working distance in the second state from the working distance in the first state increases.

In an embodiment, wherein the filter detector is the second detector.

In an embodiment, the spatial light modulator is configured to modulate light received from the light source by reflecting the light, and comprises multiple digital micromirror devices arranged in an array.

In an embodiment, wherein the first detector and the second detector are configured to detect color information of a light beam focused at and reflected from a position corresponding to a height of the base of the measurement object or a height of the transparent material disposed on the base among the light beams refracted for each wavelength.

In an embodiment, wherein the light emitter is configured to emit the multiple light beams having multiple focal points downward onto the surface of the measurement object in a horizontal direction perpendicular to the vertical direction.

Another aspect of the present disclosure provides embodiments of a method for inspecting a three-dimensional shape. The method for inspecting a three-dimensional shape according to a representative embodiment comprises: a light modulation step of modulating light received from a light source to emit multiple light beams having multiple focal points onto a surface of a measurement object; a light emission step of refracting each of the modulated light beams at different refractive indices for each of multiple wavelengths based on chromatic aberration, thereby emitting the modulated light beams downward to form a measurement section in a vertical direction, in which the light beams refracted for each of multiple wavelengths are focused; an optical path formation step of transmitting a part of the light reflected from the measurement object and reflecting another part of the light reflected from the measurement object by a beam splitter; a first detection step of detecting information on the wavelength of the light transmitted in the optical path formation step; and a second detection step of detecting information on the wavelength of the light reflected in the optical path formation step, wherein one of the first detection step and the second detection step comprises a filter detection step of blocking light of a specific wavelength or greater and detecting information on light of a wavelength less than the specific wavelength.

In an embodiment, wherein the filter detection step is configured to detect light intensity information, and wherein the method further comprises: a focus adjustment step of changing the measurement section by vertically changing the positions where the light beams refracted for each wavelength are focused when it is determined that the light intensity information is equal to or less than a predetermined first specific intensity or equal to or greater than a predetermined second specific intensity.

In an embodiment, wherein the filter detection step is configured to detect light intensity information, and wherein the method further comprises: a focus adjustment step of changing the measurement section by vertically changing the positions where the light beams refracted for each wavelength are focused when the light intensity information satisfies a predetermined criterion, and wherein the first detection step and the second detection step are performed again in a state in which the measurement section is changed.

ADVANTAGEOUS EFFECTS

According to embodiments of the present disclosure, it is possible to perform a 3D inspection of a large area of a measurement object at a higher speed by using a spatial light modulator and an image sensor configured to detect color information of light.

According to the embodiments of the present disclosure, even when the measurement object includes a transparent material, inspection of the measurement object is possible without prior information on the refractive index of the transparent material.

According to an embodiment of the present disclosure, even when the measurement object includes a transparent material, inspection of the measurement object is possible regardless of the shape of the measurement object.

BRIEF DESCRIPTION OF DRAWINGS

FIG. 1 is a schematic view illustrating an operating method of a three-dimensional shape inspection device according to a comparative embodiment of the present disclosure.

FIG. 2 is a schematic view illustrating a problem of the three-dimensional shape inspection device according to the comparative embodiment of FIG. 1 when a transparent material is placed on a base of a measurement object.

FIG. 3 is a graph showing the wavelength and intensity of light detected by a spectrometer of the three-dimensional shape inspection device according to the comparative embodiment in the situation of FIG. 2.

FIG. 4 is a schematic view illustrating issues that arise in an inspection situation by the three-dimensional shape inspection device according to the comparative embodiment depending on the shape of a base and a transparent material.

FIG. 5 is an overall perspective view of a three-dimensional shape inspection device according to an embodiment of the present disclosure.

FIG. 6 is a cross-sectional view taken along line A1-A1' illustrated in FIG. 5.

FIG. 7 is a schematic view illustrating a digital micromirror device used in an embodiment of the present disclosure.

FIG. 8 is a schematic view illustrating a charge-coupled device (CCD) used in an embodiment of the present disclosure.

FIG. 9 is a schematic view illustrating a process in which a three-charge-coupled device acquires RGB information of light according to an embodiment of the present disclosure.

FIG. 10 is a conceptual view illustrating a process of converting the RGB information acquired in FIG. 9 into an HSV coordinate system.

FIG. 11 is a schematic view illustrating the operation of the three-dimensional shape inspection device according to an embodiment of the present disclosure.

FIG. 12 is a graph illustrating the operation of a filter unit that blocks light of a specific wavelength or longer in FIG. 11.

FIG. 13 is a schematic view illustrating light beams each of which is focused at and reflected from a position corresponding to the height of a base of a measurement object or the height of a transparent material disposed on the base, among light beams refracted for each wavelength by an optical system.

FIG. 14 is a graph illustrating a situation in which information on light intensity detected by the filter detector is determined to be equal to or lower than a predetermined first specific intensity.

FIG. 15 is a graph illustrating a situation in which information on light intensity detected by the filter detector is determined to be equal to or higher than a predetermined second specific intensity.

FIG. 16 is a graph illustrating a situation in which the information on light intensity detected by the filter detector satisfies a predetermined criterion.

FIG. 17 is a schematic view illustrating that the three-dimensional shape inspection device according to an embodiment of the present disclosure is capable of performing inspection regardless of the shape of the base and the transparent material.

FIG. 18 is a schematic view illustrating a method by which the three-dimensional shape inspection device according to an embodiment of the present disclosure measures the height of a base of the measurement object and the height of a transparent material disposed on the base.

FIG. 19 is a graph illustrating unique focal shifts for each wavelength of the optical system according to an embodiment of the present disclosure.

FIG. 20 is a flowchart illustrating the flow of an embodiment of a three-dimensional shape inspection method of the present disclosure.

FIG. 21 is a flowchart illustrating a flow of an embodiment of the three-dimensional shape inspection method of the present disclosure in a case where a measurement object includes a transparent material.

DETAILED DESCRIPTION

Embodiments of the present disclosure are illustrated for describing the technical idea of the present disclosure. The scope of the claims according to the present disclosure is not limited to the embodiments described below or to the detailed descriptions of these embodiments.

All technical or scientific terms used in the present disclosure have meanings that are generally understood by a person having ordinary knowledge in the art to which the present disclosure pertains, unless otherwise specified. The terms used in the present disclosure are all selected only for more clear description of the present disclosure, and are not intended to limit the scope of claims according to the present disclosure.

The expressions "include," "provided with," "have" and the like used herein should be understood as open-ended terms connoting the possibility of inclusion of other embodiments, unless otherwise mentioned in a phrase or sentence including the expressions.

In the present disclosure, the singular of an expression may include the meaning of the plural of the expression unless the context clearly indicates otherwise, and the same applies to singular forms of expressions as set forth in the claims.

The terms "first," "second," etc. used in the present disclosure are used to distinguish multiple components from one another, and are not intended to limit the order or importance of the relevant components.

The term "unit" used in these embodiments means a software component or hardware component, such as a field-programmable gate array (FPGA) and an application specific integrated circuit (ASIC). However, a "unit" is not limited to software and hardware, and it may be configured to be an addressable storage medium or may be configured to run on one or more processors. For example, a "unit" may include components, such as software components, object-oriented software components, class components, and task components, as well as processors, functions, attributes, procedures, subroutines, segments of program codes, drivers, firmware, micro-codes, circuits, data, databases, data structures, tables, arrays, and variables.

The expression "based on" used herein is used to describe one or more factors that influences a decision, an action of judgment or an operation described in a phrase or sentence including the relevant expression, and this expression does not exclude additional factor influencing the decision, the action of judgment or the operation.

In the present disclosure, the expression that a component (e.g., a first component) is "connected" or "coupled" to another component (e.g., a second component) may mean that the first component is connected or coupled to the second component not only directly, but also via another new component (e.g., a third component).

Directional designators such as "downward" and "down" used in the present disclosure are based on the direction in which the object being measured is positioned relative to the three-dimensional shape inspection device in the accompanying drawings, while directional terms like "upward" and "above" refer to the opposite direction, however, this is merely for the purpose of ensuring a clear understanding of the disclosure, and each direction can be defined differently depending on where the reference is set.

Hereinafter, embodiments of the present disclosure will be described with reference to the accompanying drawings. In the accompanying drawings, identical or corresponding components are indicated by identical reference numerals. In the following description of embodiments, redundant descriptions of the identical or corresponding components will be omitted. However, the omission of a description of a component does not imply that such a component is not included in an embodiment.

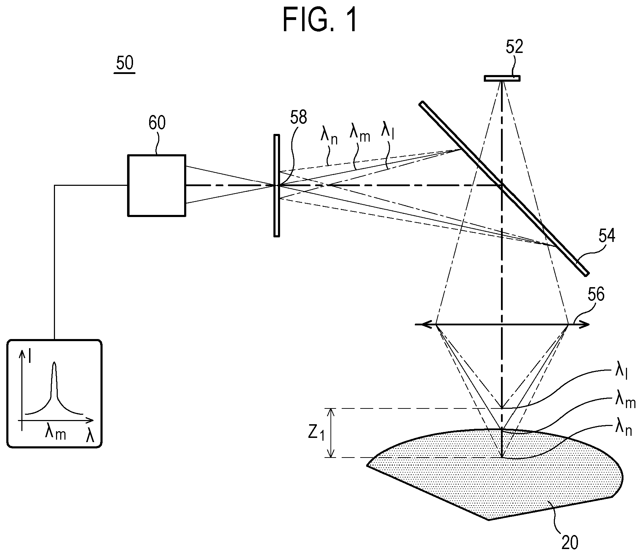

FIG. 1 is a schematic view illustrating an operating method of a three-dimensional shape inspection device according to a comparative embodiment of the present disclosure.

Referring to FIG. 1, the operating method of the three-dimensional shape inspection device 50 according to the comparative embodiment is explained as follows.

The three-dimensional shape inspection device 50 may emit light onto a surface of a measurement object 20 by transmit light emitted from a light source 52 through a beam splitter 54. The light source 52 may be configured to emit light having multiple wavelengths. The measurement object 20 may include various objects to be inspected, such as cells, metallic and non-metallic materials, and semiconductor substrates, which are used in fields such as life sciences, semiconductors, and materials science. In addition, the measurement object 20 may include a material such as a transparent material and may include specular surfaces such as semiconductors (e.g., C4-bumps, $\mu$-bumps, and dies).

The light transmitted through the beam splitter 54 may be refracted by an optical system 56. The optical system 56 may be configured to refract incident light at different refractive indices for respective wavelengths based on chromatic aberration. The optical system 56 may be configured to focus light such that, based on chromatic aberration, light having a longer wavelength is focused at a position farther from the optical system 56, and light having a shorter wavelength is focused at a position closer to the optical system 56. For example, referring to FIG. 1, a state in which light having multiple wavelengths is refracted at different refractive indices by the optical system 56 is illustrated, and a state in which light having the shortest wavelength $\lambda_1$ among the multiple wavelengths is focused at the position closest to the optical system 56, while light having the longest wavelength $\lambda_n$ among the multiple wavelengths is focused at the position farthest from the optical system 56, is illustrated. Among the light beams refracted for each of wavelengths, a light beam having a height-corresponding wavelength $\lambda_m$, which is focused at a position corresponding to a height on the surface of the measurement object 20, may be present. The height-corresponding wavelength $\lambda_m$ may have a value between the shortest wavelength $\lambda_1$ and the longest wavelength $\lambda_n$.

The light beams refracted for each of multiple wavelengths may be configured to be reflected from the surface of the measurement object 20 so as to be reflected at the beam splitter 54. The beam splitter 54 may reflect each of the light beams reflected from the surface of the measurement object 20 and having multiple wavelengths toward a pinhole 58. The beam splitter 54, the optical system 56, and the pinhole 58 may be configured to allow only a light beam having a height-corresponding wavelength $\lambda_m$, which is focused and reflected at a position corresponding to a height on the surface of the measurement object 20 among the respective light beams having multiple wavelengths, to pass through the pinhole 58. A spectrometer 60 may be disposed on a light path passing through the pinhole 58. The spectrometer 60 may be configured to detect the spectrum of the light according to wavelengths and to detect intensity information of the light according to wavelengths.

The three-dimensional shape inspection device 50 may be configured to measure the height of the measurement object 20 by detecting the wavelength components of the light focused on the surface of the measurement object 20 through the spectrometer 60. By moving the three-dimensional shape inspection device 50 or the measurement object 20 in a horizontal direction to perform an inspection, a 3D inspection for inspecting the three-dimensional shape of the measurement object 20 may be performed. The three-dimensional shape inspection device 50 according to the comparative embodiment is limited in that only a point scan method or a minute-length line scan method is possible, in which light emitted from the light source 52 is emitted only to a single point on the surface of a measurement object to perform 3D inspection, resulting in a very slow inspection speed. The inspection speed of the point scan method of the three-dimensional shape inspection device 50 according to the comparative embodiment may be less than 1 mm$^2$.

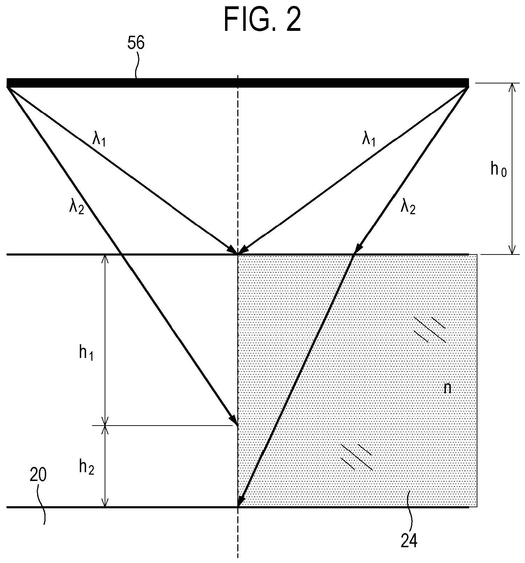

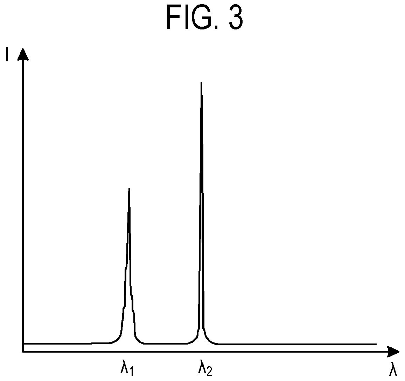

FIG. 2 is a schematic view illustrating a problem of the three-dimensional shape inspection device according to the comparative embodiment of FIG. 1 when a transparent material is placed on a base of a measurement object. FIG. 3 is a graph showing the wavelength and intensity of light detected by a spectrometer of the three-dimensional shape inspection device according to the comparative embodiment of FIG. 2.

Referring to FIG. 2, the measurement object 20 may include a base 22 and a transparent material 24. The transparent material 24 may be disposed on the base 22. The transparent material 24 is a medium through which light travels and is transmitted. The refractive index n of the transparent material 24 may be different from that of the space in which the transparent material 24 is placed and through which light travels before being transmitted through the transparent material 24. Since the refractive index n of the transparent material 24 differs from that of the surrounding space, the light incident on the transparent material 24 is refracted and transmitted through the transparent material 24.

As illustrated in FIG. 3, the three-dimensional shape inspection device 50 is a device that measures the height of the measurement object 20 by detecting the wavelength components of light beams that are focused on the surface of the measurement object 20. When the transparent material 24 is disposed on the base 22 of the measurement object 20, the wavelength components of light focused on and reflected from the surface of the measurement object 20 may exist as two components. For example, a wavelength component $\lambda_1$ of light focused on and reflected from the surface of the transparent material 24 of the measurement object 20 and a wavelength component $\lambda_2$ of light focused on and reflected from the surface of the base 22 of the measurement object 20 may exist. If the wavelength component $\lambda_1$ of light focused on and reflected from the surface of the transparent material 24 of the measurement object 20 is detected, the distance $h_0$ from the optical system to the surface of the transparent material may be measured. However, if the wavelength component $\lambda_2$ of light focused on and reflected from the surface of the base 22 of the measurement object 20 is detected, the measured distance may be $h_0 + h_1$, which corresponds to the wavelength $\lambda_2$ of the light. Since the distance $h_0 + h_1$ measured based on the detected wavelength $\lambda_2$ of the light reflected from the surface of the base 22 differs from the actual distance $h_0 + h_1 + h_2$ from the optical system to the actual position of the base, the inspection accuracy of the three-dimensional shape inspection device may deteriorate. Accordingly, if there is no information on the refractive index n of the transparent material, a correction process to convert the measured distance $h_0 + h_1$ into the actual distance $h_0 + h_1 + h_2$ from the optical system to the base cannot be performed.

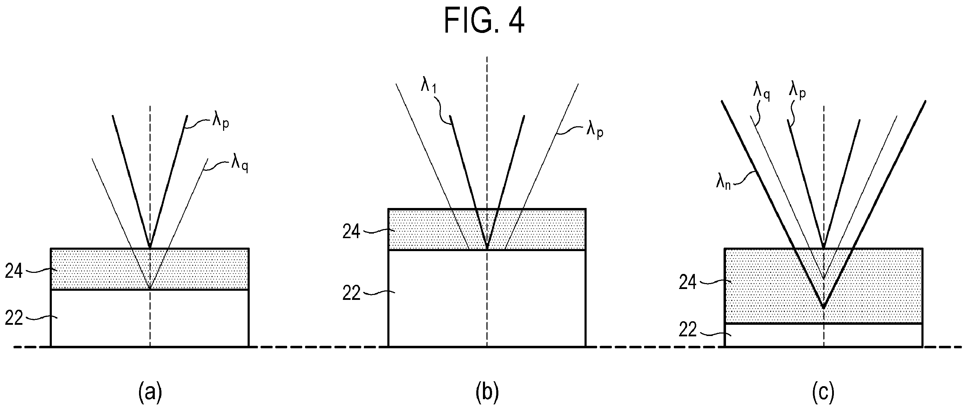

FIG. 4 is a schematic view illustrating issues that arise in the three-dimensional shape inspection device according to the comparative embodiment depending on the shape of the base and the transparent material.

Referring to FIGS. 1 and 4, light beams having multiple wavelengths are illustrated as being refracted by the optical system 56 at different refractive indices. Among the multiple wavelengths, the light beam having the shortest wavelength $\lambda_1$ is focused at the position closest to the optical system 56, while the light beam having the longest wavelength $\lambda_n$ is focused at the position farthest from the optical system 56. In addition, the multiple wavelengths may include arbitrary wavelengths $\lambda_p$ and $\lambda_q$ having values between the shortest wavelength $\lambda_1$ and the longest wavelength $\lambda_n$.

As illustrated in (a) of FIG. 4, among the light beams refracted for each wavelength by the optical system, there exist light beams that are focused at positions corresponding to the height of the base 22 or the height of the transparent material 24. The wavelengths of the focused light beams have values between the shortest wavelength $\lambda_1$ and the longest wavelength $\lambda_n$, specifically wavelengths $\lambda_p$ and $\lambda_q$. Accordingly, in a situation as illustrated in (a) of FIG. 4, inspection is possible based on the height corresponding to the detected wavelengths $\lambda_p$ and $\lambda_q$. However, in situations such as those illustrated in (b) and (c) of FIG. 4, inspection may be impossible depending on the shape of a specimen.

As illustrated in (b) of FIG. 4, the measurement object 20 may be a specimen in which the base 22 is very thick. Because the base 22 is very thick, among the light beams refracted for each wavelength by the optical system, only the light beam focused at the position corresponding to the height of the base 22 exist, and there may be no light beams focused at the position corresponding to the height of the transparent material 24. Accordingly, in a situation such as that illustrated in (b) of FIG. 4, since inspection of the transparent material 24 is impossible, inspection of the measurement object 20 may also be impossible.

As illustrated in (c) of FIG. 4, the measurement object 20 may be a specimen in which the transparent material 24 is very thick. Because the transparent material 24 is very thick, among the light beams refracted for each wavelength by the optical system, only the light beam focused at the position corresponding to the height of the transparent material 24 exist, and there may be no light beams focused at the position corresponding to the height of the base 22. Accordingly, in a situation such as that illustrated in (c) FIG. 4, since inspection of the base 22 is impossible, inspection of the measurement object 20 may also be impossible.

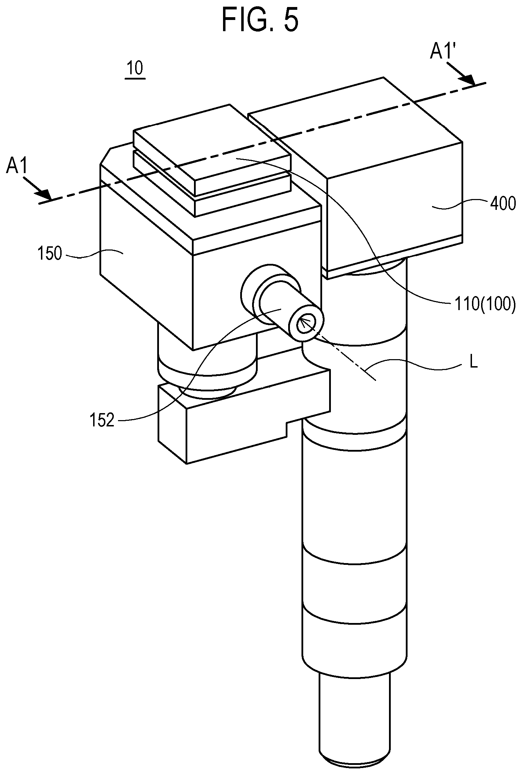

In contrast, a three-dimensional shape inspection device and a three-dimensional shape inspection method according to an embodiment of the present disclosure, which will be described with reference to FIGS. 5 to 21, enable high-speed, large-area 3D inspection of a measurement object by using a spatial light modulator and an image sensor configured to detect color information of light. In addition, the present disclosure provides a three-dimensional shape inspection device and a three-dimensional shape inspection method, which enable inspection even when the refractive index of a transparent material is unknown during the inspection of a measurement obj ect including the transparent material and allow inspection regardless of the shape of the specimen of the measurement object.

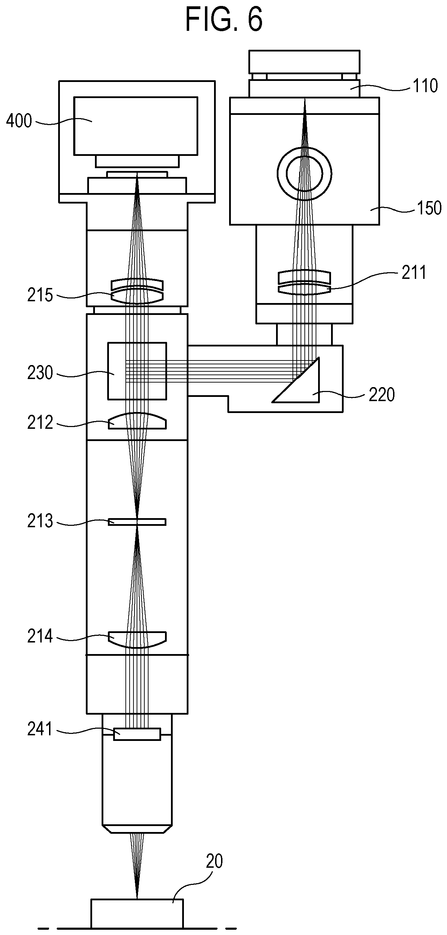

FIG. 5 is an overall perspective view of a three-dimensional shape inspection device according to an embodiment of the present disclosure. FIG. 6 is a cross-sectional view taken along line A1-A1' illustrated in FIG. 5.

Referring to FIGS. 5 and 6, a three-dimensional shape inspection device 10 may be configured to inspect the three-dimensional shape of a measurement object 20. The three-dimensional shape inspection device 10 may be configured to inspect the shape of the measurement object 20 by emitting light onto the measurement object 20 and detecting information of the reflected light. By moving the position of the three-dimensional shape inspection device 10 or the measurement object 20 and detecting various positions and heights on the surface of the measurement object 20, the three-dimensional shape of the measurement object 20 may be inspected. In FIG. 5, for convenience of explanation, the three-dimensional shape inspection device 10 and the measurement object 20 are illustrated as being positioned at a single point. However, the present disclosure is not limited thereto, and the three-dimensional shape inspection device 10 and the measurement object 20 may move in the vertical direction or the horizontal direction for inspection.

The three-dimensional shape inspection device 10 may include a light emitter 100, an optical system, a light splitter 230, and an image sensor 400.

The light emitter 100 may be configured to emit light onto the surface of the measurement object 20. The light emitter 100 may be configured to emit light downward to a location where the measurement object 20 is positioned.

The light emitter 100 may include a light source (not source) and a spatial light modulator 110. The light source may be a white light source having multiple wavelengths. The light source may include any one of an LED, a halogen lamp, and a xenon lamp. The light source may include Sunlike LED. The present disclosure is not limited thereto, and any light source capable of emitting light having multiple wavelengths may be used in the present disclosure.

The light emitter 100 may include a light emitter case 150 configured to receive light L from the light source into the interior of the three-dimensional shape inspection device 10. The light emitter case 150 may have an inner space formed therein and may be configured to receive the light L from the light source. The inner space of the light emitter case 150 may serve as an intermediate path along which the light L from the light source is emitted onto the measurement object 20. The light emitter case 150 may include a light receiver 152, which has a hole formed therein and protrudes outward. The light L from the light source may be received into the interior of the three-dimensional shape inspection device 10 through the light receiver 152.

The spatial light modulator (SLM) 120 may be configured to modulate the light L received from the light source. The spatial light modulator 110 may include any device capable of changing the amplitude or phase information of incident light depending on position. The spatial light modulator 110 may be a device capable of forming an optical image in a three-dimensional space by controlling the spatial distribution of light.

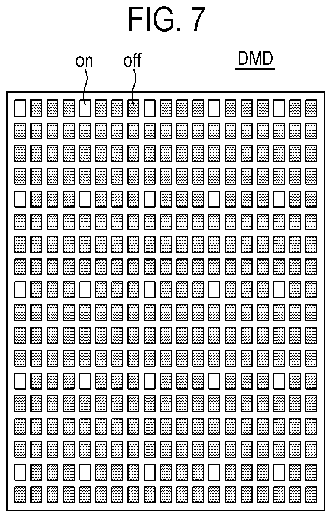

The spatial light modulator 110 may be configured to modulate the light received from the light source so that the light has multiple focal points. The light emitter 100 may be configured to emit multiple light beams having multiple focal points onto the surface of the measurement object 20. In FIGS. 5 and 6, a single light beam having a single focal point is illustrated as being emitted onto the surface of the measurement object 20. However, this is for convenience of explanation, and the configuration may be such that multiple light beams having multiple focal points are emitted onto the surface of the measurement object 20 using multiple digital micromirror devices (DMDs), which are an example of a spatial light modulator to be described later with reference to FIG. 7.

The optical system may refract light for each of multiple wavelengths by using chromatic aberration. The optical system may refract light beams at different refractive indices for each of multiple wavelengths. The optical system may refract each of the light beams modulated by the spatial light modulator 110. The optical system may be configured to form a measurement section in which the light beams refracted for each of multiple wavelengths are focused by refracting the light beams having multiple wavelengths at different refractive indices. The measurement section may be formed in the vertical direction. In FIGS. 5 and 6, a single light beam having a single focal point is illustrated as being emitted onto the surface of the measurement object 20. However, as illustrated in FIG. 1, modulated light beams may form a measurement section in the vertical direction by refracting the light (L) received from the light source at different refractive indices for each of multiple wavelengths through the optical system.

The optical system may include multiple lenses 211, 212, 213, 214, 215, and 241. The lenses may include any optical device that converges or diverges light by refracting received light. The lenses may include a variable lens 241 having an adjustable curvature. The variable lens 241 will be described later together with the focus adjuster 240.

The three-dimensional shape inspection device 10 may include a reflector 220 configured to reflect light and change the light path. The reflector 220 may include an optical device configured to reflect received light so that the light is transmitted along a different path.

The three-dimensional shape inspection device 10 may include a beam splitter 230 configured to reflect a portion of the light and transmit another portion of the light, thereby splitting the light path into two paths. The beam splitter 230 may be configured to transmit a portion of the light reflected from the measurement object. The beam splitter 230 may be configured to reflect another portion of the light reflected from the measurement object.

The image sensor 400 may be configured to detect color information of the light. The image sensor 400 may be configured to detect light beams reflected from the measurement object 20. The image sensor 400 may be configured to detect a light beam that is focused at and reflected from a position corresponding to a height on the surface of the measurement object 20, among the light beams refracted for each wavelength and reflected from the measurement object 20. The height on the surface may be the height of the base 22 or the height of the transparent material 24 of the measurement object 20. The image sensor 400 may be configured to detect color information of multiple light beams that are focused on and reflected from the surface of the measurement object 20.

In an embodiment, the three-dimensional shape inspection device 10 may include a controller configured to measure the height of the surface of the measurement object 20. The controller may include a computer that stores programs and/or information. The controller may be configured to measure the height of the measurement object 20 based on the color information detected by the image sensor 400. Based on the color information of multiple light beams detected by the image sensor 400, the height of the measurement object 20, from which the multiple light beams are reflected, may be measured. The image sensor 400 may be configured to measure the respective heights, from which multiple light beams are reflected, on the surface of the measurement object 20. The image sensor 400 of the three-dimensional shape inspection device 10 according to the present disclosure may measure the heights at multiple positions on the surface of the measurement object 20 at once, thereby enabling high-speed and large-area inspection of the measurement object.

FIG. 7 is a schematic view illustrating a digital micromirror device used in an embodiment of the present disclosure. With reference to FIG. 7, an example of a spatial light modulator 110 according to an embodiment of the present disclosure, which is a digital micromirror device (DMD), will be described.

The spatial light modulator 110 may include a digital micromirror device (DMD) using digital light processing (DLP) technology. The digital micromirror device (DMD) may include multiple digital micromirror devices (DMDs) arranged in an array format. The digital micromirror devices (DMDs) may be microscopic mirrors fabricated using microelectromechanical systems (MEMS). That is, each of the multiple digital micromirror devices (DMDs) may function as a pixel. The digital micromirror devices (DMDs) in FIG. 6 form an array of 18 rows and 19 columns. However, the numbers of rows and columns forming the array are merely exemplary and may have any other numbers of rows and columns.

The digital micromirror devices (DMDs) may each include an electrode provided at the bottom to receive an electrical signal from an external source, and a reflective mirror provided at the top to reflect light. When an electrical signal is applied to the electrode at the bottom of each digital micromirror device (DMD), the angle of the reflective mirror is adjusted so that the light may be reflected to an external projection lens (not illustrated) and emitted, or reflected to an absorption plate (not illustrated) and absorbed without being emitted. The light of each individual digital micromirror device (DMD) may be adjusted to an on or off state by adjusting the electrode at the bottom of the digital micromirror device (DMD). Since the spatial light modulator 110 is capable of adjusting each pixel of the digital micromirror devices (DMDs) to an on or off state, the spatial light modulator may be configured to modulate the light L received from the light source into light having a desired shape and form. In FIG. 7, the digital micromirror devices in the $(4n+1)^{th}$ rows and $(4n+1)^{th}$ columns of the array are illustrated as being in the on state, where n is an integer equal to or greater than 0. However, the present disclosure is not limited thereto, and the digital micromirror devices of individual array elements may be arbitrarily adjusted to an on/off state.

Referring to FIGS. 5 to 7, the light emitter 100 may be configured to emit multiple light beams downward onto the surface of the measurement object 20 in a horizontal direction perpendicular to the vertical direction. Each of the multiple digital micromirror devices (DMDs) may be adjusted to an on or off state, and light reflected from the digital micromirror devices (DMDs) in the on state may be emitted toward the measurement object 20. Accordingly, the multiple light beams emitted from the multiple digital micromirror devices (DMDs), respectively, and modulated may be configured to have multiple focal points. The three-dimensional shape inspection device 10 according to an embodiment of the present disclosure may be configured to emit multiple light beams having multiple focal points onto the surface of the measurement object 20.

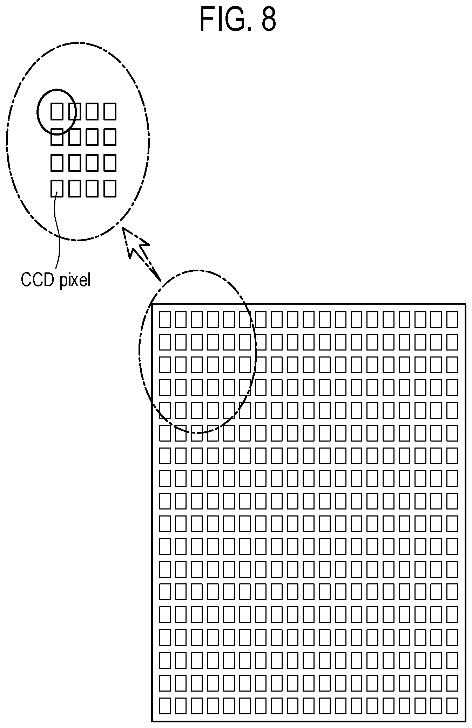

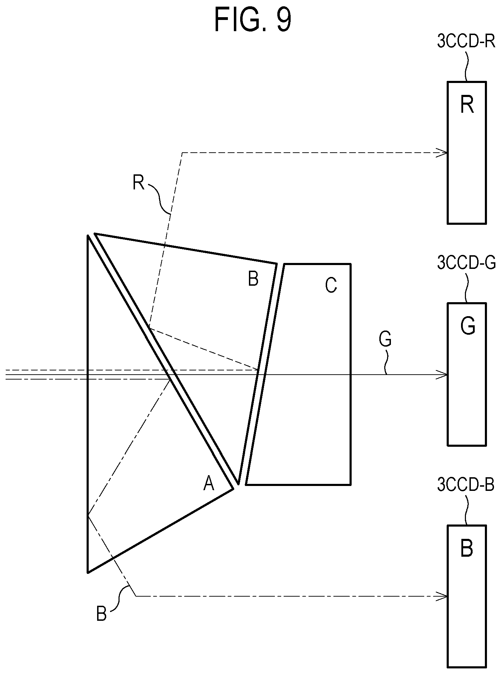

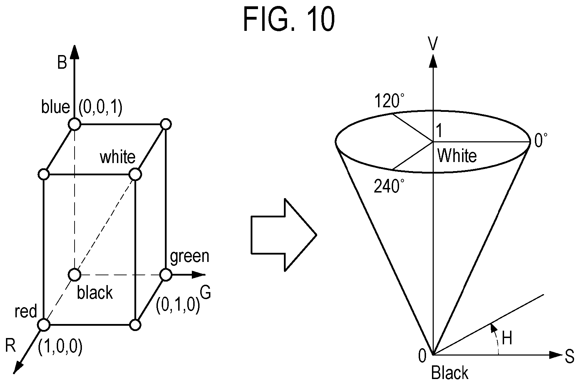

FIG. 8 is a schematic view illustrating a charge-coupled device (CCD) used in an embodiment of the present disclosure. FIG. 9 is a schematic view illustrating a process in which a three-charge-coupled device acquires RGB information of light according to an embodiment of the present disclosure. FIG. 10 is a conceptual view illustrating a process of converting the RGB information acquired in FIG. 8 into an HSV coordinate system.

In an embodiment referring to FIG. 8, the image sensor may include a charge-coupled device (hereinafter referred to as "CCD"). The charge-coupled device (CCD) may refer to a sensor that converts light into charge to obtain information of the light. The charge-coupled device (CCD) may be a configured as a pixel-type chip, in which photodiodes are arranged inside to generate electrons depending on the amount of photons, thereby obtaining intensity information of the light by measuring and reconstructing the amount of electrons or current.

The charge-coupled device (CCD) may include multiple charge-coupled devices (CCDs) arranged in an array format. Each of the charge-coupled devices (CCDs) may function as a pixel. The multiple charge-coupled devices (CCDs) may be configured to detect color information of multiple modulated light beams that have multiple focal points and are focused on and reflected from the surface of the measurement object 20. Based on the color information of the multiple light beams detected by the charge-coupled devices (CCDs), the respective heights on the surface of the measurement object 20, from which the multiple light beams are reflected, may be measured.

The charge-coupled device (CCD) may be a single-charge-coupled device (1CCD) having a single charge-coupled device or a three-charge-coupled device (hereinafter referred to as 3CCD) having three separate charge-coupled devices. For example, referring to FIG. 9, the three-charge-coupled device (3CCD) may include three separate charge-coupled devices (3CCD-R, 3CCD-G, and 3CCD-B). Each of the three separate charge-coupled devices (3CCD-R, 3CCD-G, and 3CCD-B) may be positioned on the optical paths of light separated into R, G, and B components by prisms A, B, and C, respectively, and may detect the R, G, and B components of the light. The three-charge-coupled device (3CCD) detects the R, G, and B components separated by the prisms A, B, and C, respectively, and may provide higher color reproducibility and image quality than the single-charge-coupled device (1CCD) type.

In another embodiment, which is not illustrated, the image sensor 400 may include a complementary metal-oxide-semiconductor (CMOS). The CMOS may include multiple pixels. The light reaching each pixel may be collected by a photodiode to generate electrons, and the generated electrons may be converted into a voltage to detect optical information.

The image sensor 400 may include any one of a color camera, a multispectral camera, and a monochrome camera with a band-pass filter. The image sensor 400 of the present disclosure is not limited thereto and includes any device capable of detecting RGB information of light.

The color information of light detected by the image sensor 400 may include RGB information. For example, the color information of light detected by the three-charge-coupled device (3CCD) of the image sensor 400 may include RGB information. The RGB information may be RGB information of a light beam focused at and reflected from a position corresponding to a height on the surface of the measurement object 20, among the light beams refracted for each wavelength.

The image sensor 400 may be configured to acquire wavelength information of light based on the detected RGB information.

In an embodiment not illustrated, by creating a lookup table, in which wavelength information corresponding to RGB information has been pre-tabulated, the RGB information detected by the image sensor 400 may be converted into wavelength information of light.

In another embodiment referring to FIG. 10, the image sensor 400 may be configured to acquire wavelength information of light that is focused on and reflected from the surface of the measurement object 20 by converting RGB information into another coordinate system. The other coordinate system may be an HSV coordinate system or a CIE XYZ coordinate system. For example, by converting the RGB information detected by the image sensor 400 into the HSV coordinate system using the following Equations 1, 2, and 3, the wavelength information of light may be acquired through HSV information. H represents Hue and has a value ranging from 0° to 360°, where 0° and 360° may correspond to the hue of red. S represents Saturation and, assuming that the most vivid state is 100%, a value of 0% may indicate an achromatic color with the same brightness. V represents Value and indicates the degree of brightness, where white is set to 100% and black is set to 0%. Since the wavelength information of light corresponding to the H value of the light source is a predetermined value (for example, when H is 0° or 360°, the wavelength of red light ranges from 625 nm to 740 nm), the wavelength information of the light source may be detected through the H value obtained via HSV coordinate system conversion.

[Equation 1]

$$H = \theta \ (if \ B \leq G)$$

$$= 360 - \theta \ (if \ B \geq G)$$

$$\theta = \cos^{-1} \left\{ \frac{\frac{1}{2}[(R-G)+(R-B)]}{(R-G)^2 + (R-G)(G-B)^{\frac{1}{2}}} \right\}$$

[Equation 2]

$$S = 1 - \frac{3}{(R+G+B)}[\min(R,G,B)]$$

[Equation 3]

$$V = \frac{(R+G+B)}{3}$$

In addition, in the CIE chromaticity diagram obtained by converting RGB information into the CIE XYZ coordinate system, the dominant wavelength, which is the wavelength of monochromatic light at the position closest to the chromaticity coordinates of the light source, may be detected. The aforementioned HSV coordinate system and CIE XYZ coordinate system are merely examples provided to explain the present disclosure, and any coordinate system capable of acquiring wavelength information of light may be used.

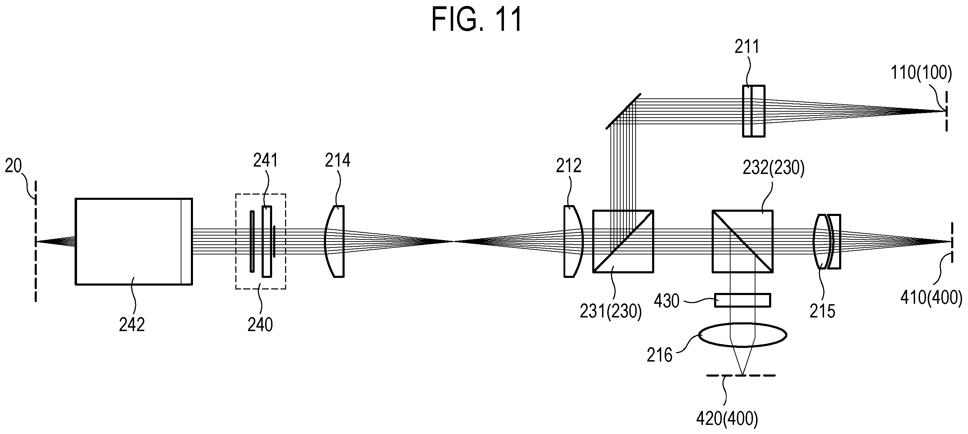

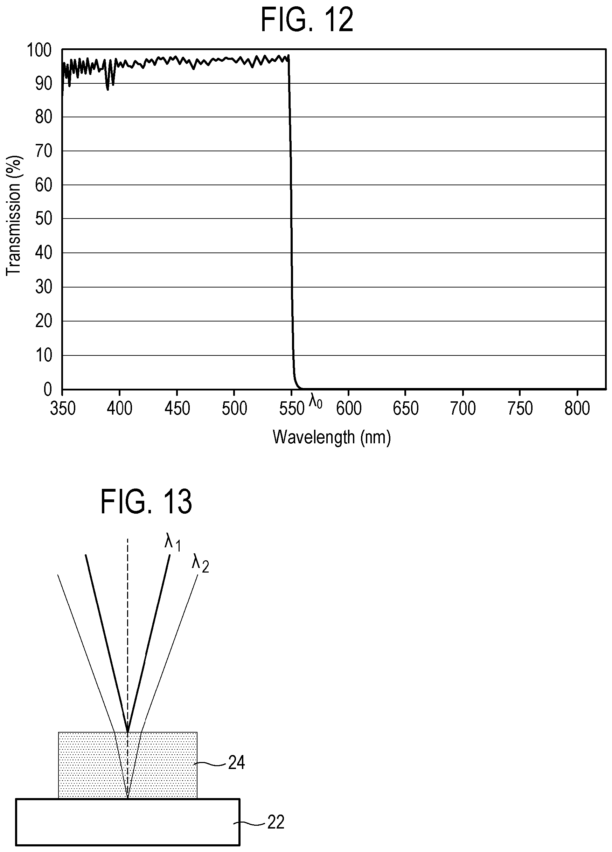

FIG. 11 is a schematic view illustrating the operation of the three-dimensional shape inspection device according to an embodiment of the present disclosure. FIG. 12 is a graph illustrating the operation of a filter unit that blocks light of a specific wavelength or longer in FIG. 11. Referring to FIGS. 5, 6, 11, and 12, the inspection method of the three-dimensional shape inspection device 10 of the present disclosure is described as follows.

Referring to FIG. 11, the spatial light modulator 110 modulates the light L received from the light source and emits the light onto the surface of the measurement object 20. An optical system for delivering light may be disposed on the path along which light travels from the spatial light modulator 110 to the measurement object 20. For example, the optical system may include multiple lenses 211, 212, 214, and 241 disposed along the path. A beam splitter 231 may be disposed on the path along which the light travels from the spatial light modulator 110 to the measurement object 20. The beam splitter 231 may form the light path from the spatial light modulator 110 to the measurement object 20 by reflecting the received light. The optical system may include a lens 242 (not illustrated) positioned before the light arrives at the measurement object 20. The lens 242 may include multiple lenses. The lens 242 may be an objective lens. The light reflected from the surface of the measurement object 20 is configured to be delivered to the image sensor 400. The image sensor 400 may include a first detector 410 and a second detector 420.

An optical system may be disposed to deliver light reflected from the measurement object 20 on a path to the first detector 410. An optical system may be disposed to deliver reflected from the measurement object 20 on a path to the second detector 420. For example, the optical system may include multiple lenses 241, 214, 212, and 215 disposed on the path to the first detector 410. Additionally, the optical system may include multiple lenses 241, 214, 212, and 216 disposed on the path to the second detector 420. A beam splitter 231 may be disposed on the path from the measurement object 20 to the first detector 410 or the second detector 420. The beam splitter 231 may form the optical path from the measurement object 20 to the first detector 410 or the second detector 420 by transmitting received light.

The three-dimensional shape inspection device 10 may include a beam splitter 232 disposed on a path from the beam splitter 231 to the first detector 410 or the second detector 420. The beam splitter 232 may be configured to transmit a portion of the light reflected from the measurement object 20 and to reflect another portion of the light reflected from the measurement object 20. The beam splitter 232 may form the optical path from the beam splitter 231 to the first detector 410 by transmitting received light. Information on the light transmitted through the beam splitter 232 may be detected by the first detector 410. The beam splitter 232 may form the optical path from the beam splitter 231 to the second detector 420 by reflecting received light. Information on the light reflected by the beam splitter 232 may be detected by the second detector 420.

The first detector 410 and the second detector 420 may measure the height of the measurement object 20 by detecting information on a reflected light beam focused at and reflected from a position corresponding to the height on the surface of the measurement object 20 among the light beams refracted for each wavelength. The information on the light beam may be information on the wavelength of the light beam. The first detector 410 and the second detector 420 may be configured to detect color information of a reflected light beam that is focused at and reflected from a position corresponding to the height of the base 22 of the measurement object 20 or the height of the transparent material 24 disposed on the base 22 among the light beams refracted for each wavelength.

In an embodiment, the three-dimensional shape inspection device 10 may include a controller configured to measure the height of the base of the measurement object and the height of the transparent material disposed on the base based on the information detected by the first detector and the second detector.

The optical path formed to ensure that the light L emitted from the light source is reflected by the measurement object 20 and delivered to the first detector 410 or the second detector 420 is not limited thereto, and an arbitrary optical path may be formed by disposing lenses, a reflector 220, and beam splitters 231 and 232.

The three-dimensional shape inspection device 10 may include a focus adjuster configured to change the measurement section by vertically changing the positions at which the light beams refracted for each wavelength by the optical system are focused. For example, the focus adjuster may be implemented as means for changing the position of the optical system according to an embodiment described later, or may be implemented as means constituting a part of the optical system to change the positions at which the light beams are focused.

The focus adjuster may change the positions at which the light beams refracted for each wavelength are focused. The focus adjuster may vertically change the positions at which the light beams are focused. The focus adjuster may be configured to change the measurement section in which the light beams refracted for each wavelength are focused. The focus adjuster may vertically change the point at which the light beam having the shortest wavelength among the light beams refracted for each wavelength is focused. The focus adjuster may vertically change the point at which the light beam having the longest wavelength among the light beams refracted for each wavelength is focused. The focus adjuster may vertically change the point at which a light beam having a wavelength between the shortest wavelength and the longest wavelength among the light beams refracted for each wavelength is focused.

In an embodiment not illustrated, the focus adjuster may operate through mechanical means for changing the measurement section by adjusting the position of the optical system. The focus adjuster may be configured to change the measurement section by vertically moving the optical system.

In another embodiment described referring to FIG. 11, the focus adjuster 240 may constitute a part of the optical system. Hereinafter, an explanation will be given based on the embodiment according to FIG. 11.

An optical system may include a focus adjuster 240. The focus adjuster 240 may operate through electromagnetic means that changes the measurement section by applying, for example, a current. The focus adjuster 240 may include a variable lens 241 configured to adjust the measurement section based on an applied current. In the present disclosure, the focus adjuster 240 is illustrated as being disposed on the optical path immediately before the light arrives at the measurement object 20. However, it is not limited thereto, and the focus adjuster 240 may be disposed on any of the optical paths from the light source to the first detector 410 and the second detector 420.

Referring to FIG. 12, a description will be given of a filter unit 430 that blocks light beams of a specific wavelength or higher.

One of the first detector 410 and the second detector 420 may be a filter detector. The filter detector may include a filter unit 430 that blocks light beams of a specific wavelength $\lambda_0$ or higher. For example, the specific wavelength may be an arbitrary wavelength $\lambda_0$, as illustrated in FIG. 12. The filter detector may be configured to detect information on light beams of a wavelength less than the specific wavelength $\lambda_0$. The present disclosure will be described based an embodiment in which the second detector 420 is a filter detector and includes a filter unit 430. However, the present disclosure is not limited thereto, and an embodiment in which the first detector 410 is a filter detector including a filter unit is also possible. The present disclosure illustrates an embodiment in which the filter unit 430 is disposed on the optical path directed toward the second detector 420, but the disclosure is not limited thereto. The filter unit 430 includes an optical filter that is disposed on the optical path and operates as mechanical means or an optical filter that is not disposed on the optical path and operates through electronic means. The optical filter may be a short-pass filter.

The first detector and the second detector may be configured to detect information on light intensity. The filter detector may be configured to detect information on light intensity.

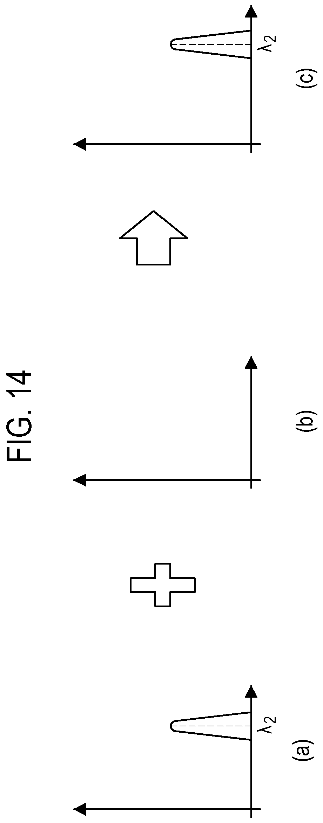

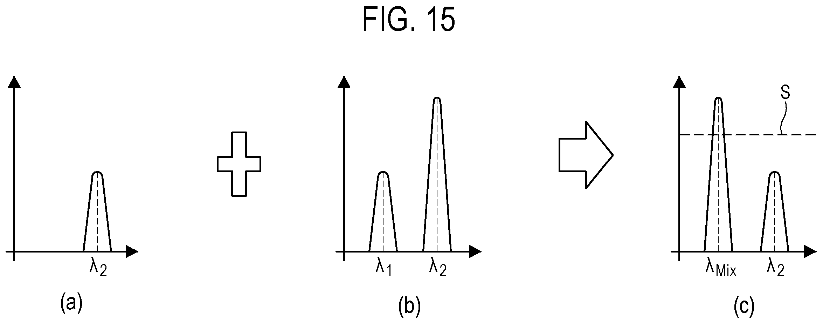

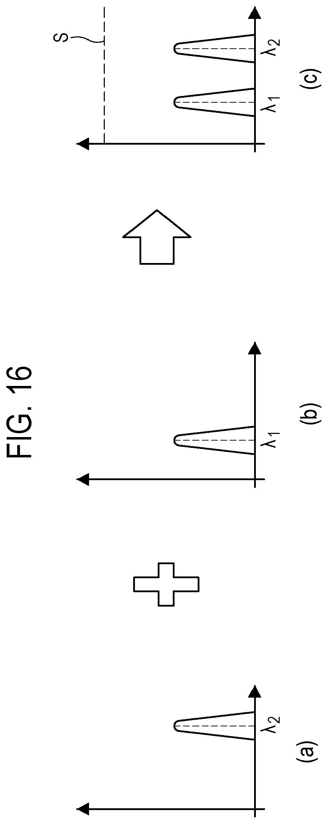

FIG. 13 is a schematic view illustrating light beams each of which is focused at and reflected from a position corresponding to the height of the base of the measurement object or the height of a transparent material disposed on the base, among light beams refracted for each wavelength by an optical system. FIG. 14 is a graph illustrating a situation in which information on light intensity detected by the filter detector is determined to be equal to or lower than a predetermined first specific intensity. FIG. 15 is a graph illustrating a situation in which information on light intensity detected by the filter detector is determined to be equal to or higher than a predetermined second specific intensity. FIG. 16 is a graph illustrating a situation in which the information on light intensity detected by the filter detector satisfies a predetermined criterion.

Referring to FIGS. 13 and 16, a description will be given of the inspection method of the three-dimensional shape inspection device when the measurement object 20 includes a transparent material 24.

When the measurement object 20 includes a base 22 and a transparent material 24, there may be a light beam focused at a position corresponding to the height of the base 22 or the height of the transparent material 24 among the light beams refracted for each wavelength by the optical system. In FIGS. 13 to 16, $\lambda_1$ is defined as the wavelength of the light beam focused at a position corresponding to the height of the transparent material 24, and $\lambda_2$ is defined as the wavelength of the light beam focused at a position corresponding to the height of the base 22.

The first detector 410 and the second detector 420 may be configured to detect wavelength information of a reflected light beam that is focused at and reflected from a position corresponding to the height of the base 22 of the measurement object 20 or the height of the transparent material 24 disposed on the base 22 among the light beams refracted for each wavelength. One of the first detector 410 and the second detector 420, which is a filter detector, may be configured to detect information on a light beam of a wavelength less than a specific wavelength $\lambda_0$ through the filter unit 430 that blocks a light beam of a specific wavelength $\lambda_0$ or longer.

Referring to FIGS. 14 to 16, (a) of FIG. 14, (a) of FIG. 15, and (a) of FIG. 16 may be graphs illustrating light information detected by a no-filter detector, which is one of the first detector and the second detector other than the filter detector. (b) of FIG. 14, (b) of FIG. 15, and (b) of 16 may graphs illustrating the light information detected by the filter detector, which is one of the first detector and the second detector. (c) of FIG. 14, (c) of FIG. 15, and (c) of FIG. 16 may be graphs illustrating both the light information detected by the filter detector and the light information detected by the no-filter detector.

Referring to (a) of FIG. 14, (a) of FIG. 15, and (a) of FIG. 16, the no-filter detector may detect the wavelength $\lambda_1$ of a light beam that is focused at and reflected from a position corresponding to the height of the transparent material 24, as well as the wavelength $\lambda_2$ of a light beam that is focused at and reflected from a position corresponding to the height of the base 22. The intensity of the wavelength $\lambda_2$ of the light beam, which is focused at and reflected from a position corresponding to the height of the base 22 and detected by the no-filter detector, and the intensity of the wavelength $\lambda_1$ of the light beam, which is focused at and reflected from a position corresponding to the height of the transparent material 24 and detected by the no-filter detector, may differ from each other. In the present disclosure, the intensity of the wavelength $\lambda_1$ of the light beam, which is focused at and reflected from a position corresponding to the height of the transparent material 24, is assumed to have a very small value, and thus the description is based on an embodiment not illustrated in (a) of (a) of FIG. 14, (a) of FIG. 15, and (a) of FIG. 16. However, the present disclosure is not limited thereto.

Depending on the relative values of the wavelength $\lambda_1$ of the light beam focused at a position corresponding to the height of the transparent material 24, the wavelength $\lambda_2$ of the light beam focused at a position corresponding to the height of the base 22, and the specific wavelength of the filter unit, three situations may exist: (1) $\lambda_0 < \lambda_1 < \lambda_2$, (2) $\lambda_1 < \lambda_2 < \lambda_0$, and (3) $\lambda_1 < \lambda_0 < \lambda_2$.

Referring to FIG. 14, a description will be given of Situation 1. The light focused at and reflected from a position corresponding to either the height of the base 22 or the height of the transparent material 24 of the measurement object 20 has a wavelength greater than the specific wavelength $\lambda_0$. Since the filter detector includes a filter unit 430 that blocks a light beam of the specific wavelength $\lambda_0$ or higher, the light beam focused at and reflected from the position corresponding to either the height of the base 22 or the height of the transparent material 24 of the measurement object 20 may be blocked by the filter unit 430 (see (b) of FIG. 14). Referring to the graph illustrating both the light information detected by the filter detector and the light information detected by the no-filter detector (see (c) of FIG. 14), only the information on a single wavelength $\lambda_2$ focused on and reflected from the surface of the base can be detected. As a result, inspection of the measurement object 20 is impossible.

Referring to FIG. 15, a description will be given of Situation 2. The light focused at and reflected from a position corresponding to either the height of the base 22 or the height of the transparent material 24 of the measurement object 20 has a wavelength smaller than the specific wavelength $\lambda_0$. Since the filter detector includes a filter unit 430 that blocks a light beam of the specific wavelength $\lambda_0$ or higher, both the light beams focused at and reflected from the positions corresponding to the height of the base 22 and the height of the transparent material 24 of the measurement object 20 may not be blocked by the filter unit 430 (see (b) of FIG. 15). Referring to the graph illustrating both the light information detected by the filter detector and the light information detected by the no-filter detector (see (c) of FIG. 15), the filter detector detects information on two wavelengths, $\lambda_1$ and $\lambda_2$, that are not blocked by the filter unit 430. As a result, the light information on a mixed wavelength $\lambda_{mix}$ of the two wavelengths $\lambda_1$ and $\lambda_2$ may be detected. The mixed wavelength $\lambda_{mix}$ contains information mixed from both wavelengths $\lambda_1$ and $\lambda_2$, and thus the intensity of the light beam corresponding to the mixed wavelength $\lambda_{mix}$ may have an intensity equal to or greater than a specific saturation intensity S. Since the wavelength information detected by both the filter detector and the no-filter detector includes the mixed wavelength $\lambda_{mix}$, measuring the height corresponding to a specific wavelength is impossible, making the inspection of the measurement object 20 infeasible.

Referring to FIG. 16, a description will be given of Situation 3. The wavelength $\lambda_2$ of the light beam focused at and reflected from the position corresponding to the height of the base 22 of the measurement object 20 is greater than the specific wavelength $\lambda_0$, while the wavelength $\lambda_1$ of the light beam focused at and reflected from the position corresponding to the height of the transparent material 24 may be smaller than the specific wavelength $\lambda_0$. Since the filter detector includes the filter unit 430 that blocks a light beam of the specific wavelength $\lambda_0$ or higher, a light beam focused at and reflected from the position corresponding to the height of the base 22 of the measurement object 20 may be blocked by the filter unit 430. For example, the filter detector may block the light beam focused at and reflected from the position corresponding to the height of the base 22 while detecting information on the wavelength $\lambda_1$ of the light focused at and reflected from the position corresponding to the height of the transparent material 24 (see (b) of FIG. 16). Referring to the graph illustrating both the light information detected by the filter detector and the light information detected by the no-filter detector (see (c) of FIG. 16), inspection may be performed based on the wavelength $\lambda_2$ of the light beam, which is focused at and reflected from the position corresponding to the height of the base 22 and detected by the no-filter detector, and the wavelength $\lambda_1$ of the light beam, which is focused at and reflected from the position corresponding to the height of the transparent material 24 and detected by the filter detector.

In Situation 1 of FIG. 14, the controller may determine the light intensity information detected by the filter detector to be equal to or less than the predetermined first specific intensity. The predetermined first specific intensity may be an arbitrarily small value. The controller may be configured to control the focus adjuster 240 to change the measurement section when determining the light intensity information detected by the filter detector to be equal to or less than the predetermined first specific intensity. The controller may be configured to control the focus adjuster 240 to change the measurement section so that the condition of Situation 3 is satisfied.

The controller may control the focus adjuster 240 to change the measurement section so that light of a shorter wavelength is reflected from the measurement object 20 when determining the light intensity information to be equal to or less than the predetermined first specific intensity. The controller may control the focus adjuster 240 to change the measurement section so that light of a shorter wavelength is reflected from the transparent material 24 when determining the light intensity information to be equal to or less than the predetermined first specific intensity. The controller may control the focus adjuster 240 to move the measurement section downward so that light of a shorter wavelength is reflected from the transparent material 24 when determining the light intensity information to be equal to or less than the predetermined first specific intensity. The controller may control the focus adjuster 240 to move the measurement section downward so that light of a wavelength smaller than the specific wavelength $\lambda_0$ is reflected from the transparent material 24 when determining that the light intensity information is equal to or less than the predetermined first specific intensity. The controller may control the focus adjuster 240 to move the measurement section downward to a point where light of a wavelength greater than the specific wavelength $\lambda_0$ is reflected from the base 22 when determining that the light intensity information is equal to or less than the predetermined first specific intensity.

In Situation 2 of FIG. 15, the controller may determine the light intensity information detected by the filter detector to be equal to or higher than the predetermined second specific intensity S. The predetermined second specific intensity may be an arbitrary value. The controller may be configured to control the focus adjuster 240 to change the measurement section when determining the light intensity information detected by the filter detector to be equal to or greater than the predetermined second specific intensity. The controller may be configured to control the focus adjuster 240 to change the measurement section so that the condition of Situation 3 is satisfied.

The controller may control the focus adjuster 240 to change the measurement section so that light of a longer wavelength is reflected from the measurement object 20 when determining the light intensity information to be equal to or greater than the predetermined second specific intensity. The controller may control the focus adjuster 240 to change the measurement section so that light of a longer wavelength is reflected from the base 22 when determining the light intensity information to be equal to or greater than the predetermined second specific intensity. The controller may control the focus adjuster 240 to move the measurement section upward so that light of a longer wavelength is reflected from the transparent material 24 when determining the light intensity information to be equal to or greater than the predetermined second specific intensity. The controller may control the focus adjuster 240 to move the measurement section upward so that light of a wavelength longer than the specific wavelength $\lambda_0$ is reflected from the base 22 when determining the light intensity information to be equal to or greater than the predetermined second specific intensity. The controller may control the focus adjuster 240 to move the measurement section upward to a point where light of a wavelength shorter than the specific wavelength $\lambda_0$ is reflected from the transparent material 24 when determining the light intensity information to be equal to or greater than the predetermined second specific intensity.

In Situation 3 of FIG. 16, the controller may determine that a predetermined criterion is satisfied when the light intensity information is equal to or greater than the first specific intensity and equal to or less than the second specific intensity. The controller may determine that the predetermined criterion is not satisfied when the light intensity information is equal to or less than the first specific intensity or equal to or greater than the second specific intensity.

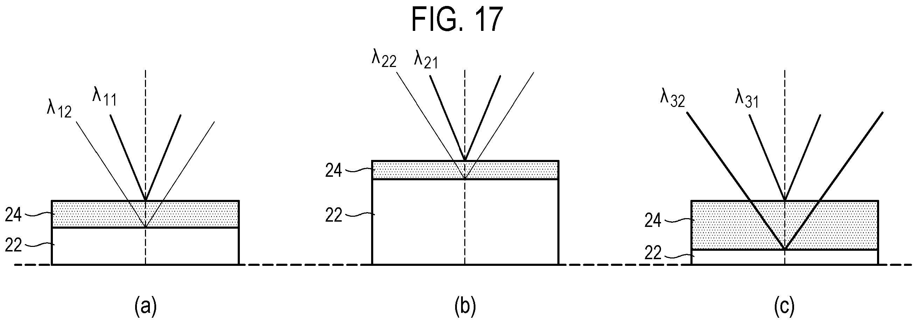

FIG. 17 is a schematic view illustrating that the three-dimensional shape inspection device according to an embodiment of the present disclosure is capable of performing inspection regardless of the shape of the base and the transparent material.

Referring to FIGS. 4 and 17, the three-dimensional shape inspection device 50 according to the comparative embodiment of FIG. 4 has a problem in that inspection is not possible depending on the shape of a specimen because it does not include a separate focus adjuster. However, the three-dimensional shape inspection device 10 according to an embodiment of the present disclosure includes the focus adjuster 240, which enables the measurement section to be changed by vertically changing the position where the light beams refracted for each wavelength are focused.

As illustrated in (a) of FIG. 17, inspection is possible not only in the case where the wavelengths $\lambda_{11}$ and $\lambda_{12}$ of light beams focused at and reflected from positions corresponding to the height of the base 22 and the height of the transparent material 24 exist among the light beams refracted for each wavelength, but also in the case where the specimen has a very thick base 22, as illustrated in (b) of FIG. 17 and in the case where the specimen has a very thick transparent material 24, as illustrated in (c) of FIG. 17, by changing the measurement section in the vertical direction using the focus adjuster 240. In the situation as illustrated in (b) of FIG. 4, the measurement section may be changed upward using the focus adjuster 240, enabling the detection of the information of the wavelengths $\lambda_{21}$ and $\lambda_{22}$ of light beams focused at and reflected from the positions corresponding to the height of the base 22 and the height of the transparent material 24, as illustrated in (b) of FIG. 17. In addition, in the situation as illustrated in (c) of FIG. 4, the measurement section may be changed downward using the focus adjuster 240, enabling the detection of the information of the wavelengths $\lambda_{31}$ and $\lambda_{32}$ of light beams focused at and reflected from the positions corresponding to the height of the base 22 and the height of the transparent material 24, as illustrated in (c) of FIG. 17.

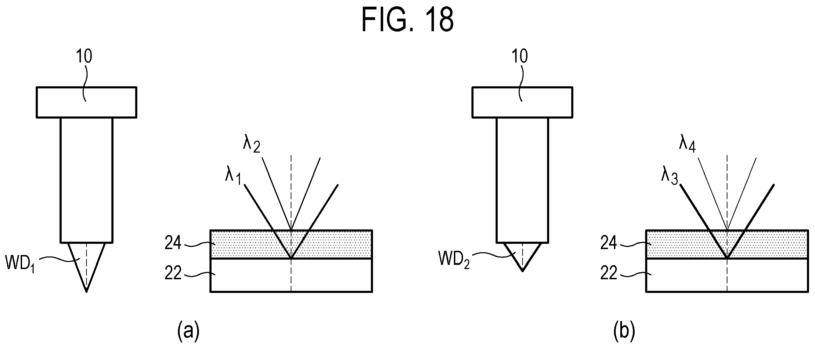

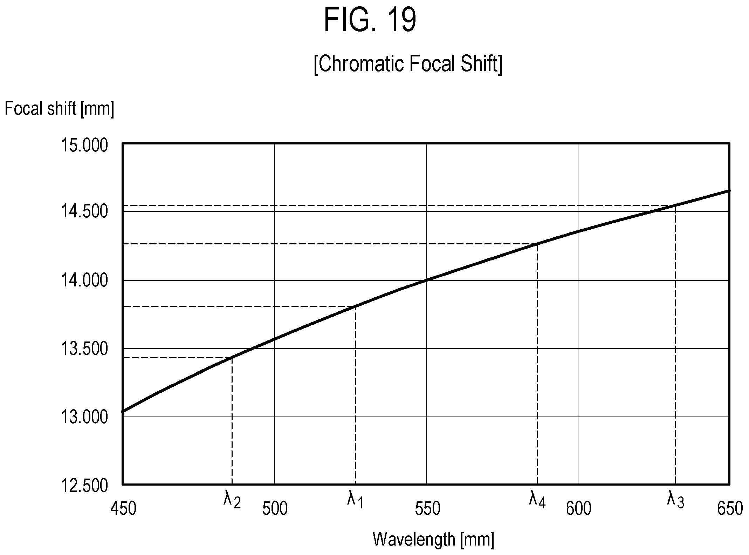

FIG. 18 is a schematic view illustrating a method by which the three-dimensional shape inspection device according to an embodiment of the present disclosure measures the height of a base of the measurement object and the height of a transparent material disposed on the base. FIG. 19 is a graph illustrating unique focal shifts for each wavelength of the optical system according to an embodiment of the present disclosure.

Referring to FIG. 18, the controller may control the focus adjuster 240 to change the measurement section when the light intensity information satisfies the predetermined criterion corresponding to Situation 3 of FIG. 16. A first state before the measurement section is changed upon the satisfaction of the predetermined criterion, is illustrated in (a) of FIG. 18, while a second state after the measurement section is changed upon the satisfaction of the predetermined criterion and the measurement section is changed, is illustrated in (b) of FIG. 18. The first detector 410 and the second detector 420 may be configured to detect information on the wavelengths of light beams again after the measurement section has been changed. The first detector 410 and the second detector 420 may be configured to detect the wavelength information $\lambda_3$ and $\lambda_4$ of light focused at and reflected from the base 22 and the transparent material 24 after the measurement section has been changed.

The controller may be configured to acquire first information detected by the no-filter detector, which is one of the first detector 410 and the second detector 420 other than the filter detector, and second information detected by the filter detector, in the first state before changing the measurement section. The first information may be the wavelength information $\lambda_1$ of a light beam focused at and reflected from the base 22. The second information may be the wavelength information $\lambda_2$ of a light beam focused at and reflected from the transparent material 24. The controller may be configured to acquire third information detected by the no-filter detector and fourth information detected by the filter detector in the second state after changing the measurement section. The present disclosure is described based on the case in which the measurement section is changed upward from the first state to the second state, but the present disclosure is not limited thereto. An embodiment in which the measurement section is changed downward to reach the second state is also possible. The third information may be the wavelength information $\lambda_3$ of a light beam focused on and reflected from the base 22. The fourth information may be the wavelength information $\lambda_4$ of a light beam focused on and reflected from the transparent material 24. The wavelength $\lambda_3$ of the third information may be greater than the wavelength $\lambda_1$ of the first information. The wavelength $\lambda_4$ of the fourth information may be greater than the wavelength $\lambda_2$ of the second information. The present disclosure is described based on the case in which the no-filter detector is the first detector 410 and the filter detector is the second detector 420, but the disclosure is not limited thereto. An embodiment in which the no-filter detector is the second detector 420 and the filter detector is the first detector 410 is also possible.

The controller may be configured to measure the height of the base 22 of the measurement object 20 and the height of the transparent material 24 disposed on the base 22 based on the first information, the second information, the third information, the fourth information, and a refractive index.

The controller may be configured to measure the height of the base 22 of the measurement object and the height of the transparent material 24 disposed on the base 22 based on the first information, the second information, the third information, and the fourth information. The controller may be configured to measure the refractive index n of the transparent material based on the working distance in the first state, the working distance in the second state, the first information, and the third information. The working distance may be defined as a value proportional to the average distance from the optical system to the positions where the light beams refracted for each wavelength are focused. That is, the working distance may be changed by the focus adjuster 240 depending on the change in the average distance from the optical system to the positions where the light beams refracted for each wavelength are focused. For example, as illustrated in FIG. 18, the second state may be the state in which the average distance from the optical system to the positions where the light beams refracted for each wavelength are focused is smaller than in the first state. The working distance $WD_2$ in the second state may be smaller than the working distance $WD_1$ in the first state. The working distance may be a value that increases depending on the current applied to the focus adjuster 240.

The optical system may have unique chromatic focal shifts for each wavelength due to chromatic aberration (see FIG. 19). The optical system may have unique chromatic focal shifts depending on how the optical system is designed. The unique chromatic focal shift caused by chromatic aberration may serve as a metric for measuring chromatic aberration and may be a quantified value that represents the degree of change in the position of the focus where multiple wavelengths are focused for each optical system.

The working distance $WD_1$ in the first state, the working distance $WD_2$ in the second state, and the unique chromatic focal shifts for each wavelength satisfy Equations 4, 5, and 6 below. Equation 6 is derived from Equation 5 by rearranging terms with respect to the refractive index n of the transparent material.

Referring to Equation 4, the value obtained by subtracting the second focal shift (Focal shift($\lambda_2$)) corresponding to the second information from the fourth focal shift (Focal shift($\lambda_4$)) corresponding to the fourth information, may be equal to the value obtained by subtracting the working distance $WD_2$ in the second state from the working distance $WD_1$ in the first state. Referring to Equation 5, the value obtained by multiplying the refractive index by the value obtained by subtracting the first focal shift (Focal shift($\lambda_1$)) corresponding to the first information from the third focal shift (Focal shift($\lambda_3$)) corresponding to the third information may be equal to the value obtained by subtracting the working distance $WD_2$ in the second state from the working distance $WD_1$ in the first state.

Referring to Equation 6, the refractive index may be equal to the value obtained by dividing the difference between the working distance $WD_1$ in the first state and the working distance $WD_2$ in the second state by the value obtained by subtracting the first focal shift (Focal shift($\lambda_1$)) corresponding to the first information from the third focal shift (Focal shift($\lambda_3$)) corresponding to the third information. As the current applied to the focus adjuster 240 increases, the difference between the working distance $WD_1$ in the first state and the working distance $WD_2$ in the second state may increase accordingly. That is, by tabulating working distances corresponding to currents applied to the focus adjuster 240, the difference between the working distance $WD_1$ in the first state and the working distance $WD_2$ in the second state may be determined based on the applied current.

[Equation 4]

$$\text{Focal shift}(\lambda_4) - \text{Focal shift}(\lambda_2) = WD_1 - WD_2$$

[Equation 5]

$$[\text{Focal shift}(\lambda_3) - \text{Focal shift}(\lambda_1)] \times \text{n} = WD_1 - WD_2$$

[Equation 6]

$$n = \frac{WD_1 - WD_2}{\text{Focal shift}(\lambda_3) - \text{Focal shift}(\lambda_1)}$$

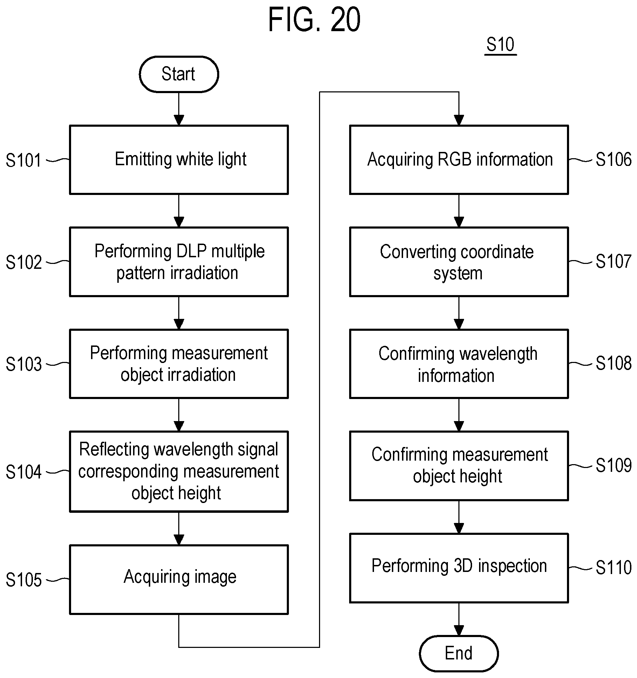

FIG. 20 is a flowchart illustrating the flow of an embodiment of a three-dimensional shape inspection method of the present disclosure.

Referring to FIGS. 5, 6, 11, and 20, the three-dimensional shape inspection method (S10) may include a white light emission step (S101), a DLP multiple pattern irradiation step (S102), a measurement object irradiation step (S103), and a step of reflecting a wavelength signal corresponding to the height of a measurement object (S104).

The white light emission step (S101) is a step of emitting light L for irradiation onto the surface of the measurement object 20 from the light source. The DLP multiple pattern irradiation step (S102) may be a step of modulating the light received in the white light emission step (S101). The DLP multiple pattern irradiation step (S102) may be configured to modulate the light L received from the light source so as to emit multiple light beams having multiple focal points onto the surface of the measurement object 20. In the DLP multiple pattern irradiation step (S102), the light modulation may be performed through the spatial light modulator 110. The DLP multiple pattern irradiation step (S102) may correspond to the light modulation step.

The measurement object irradiation step (S103) may be configured to emit downward each of the light beams modulated in the DLP multiple pattern irradiation step (S102) so as to form a measurement section in the vertical direction, in which the light beams refracted for each wavelength are focused, by refracting the light beams at different refractive indices for each of multiple wavelengths based on chromatic aberration. In the measurement object irradiation step (S103), the modulated light beams may form the measurement section through the optical system. The measurement object irradiation step (S103) may correspond to the light emission step.

The step of reflecting a wavelength signal corresponding to the height of the measurement object (S104) may be a step of reflecting a light beam focused at a position corresponding to a height on the surface of the measurement object 20 among the light beams refracted for each wavelength and emitted onto the measurement object in the measurement object irradiation step (S103).

The three-dimensional shape inspection method (S10) may include an optical path formation step of transmitting a portion of the light reflected from the measurement object and reflecting another portion of the light reflected from the measurement object. The optical path formation step may be performed by the beam splitter 230.

The three-dimensional shape inspection method (S10) may include an information acquisition step of detecting the color information of the light beam that is focused at and reflected from a position corresponding to a height on the surface of the measurement object 20 among the light beams refracted for each wavelength in the measurement section. The information acquisition step may include a first detection step of detecting information on the wavelength of the light beam transmitted in the optical path formation step. The information acquisition step may include a second detection step of detecting information on the wavelength of the light beam reflected in the optical path formation step. The first detection step and the second detection step may be performed by the first detector 410 and the second detector 420.

The information acquisition step may include an image acquisition step (S105), an RGB information acquisition step (S106), a coordinate system conversion step (S107), and a wavelength information confirmation step (S108). The first detection step and the second detection step may include an image acquisition step (S105), an RGB information acquisition step (S106), a coordinate system conversion step (S 107), and a wavelength information confirmation step (S108).

The image acquisition step (S105) may be a step of receiving an image or information of the light beam focused at and reflected from a position corresponding to a height on the surface of the measurement object 20. The image acquisition step (S105) may be configured to receive the light beam reflected from the measurement object 20 through the image sensor 400. The RGB information acquisition step (S106) may be a step of acquiring the RGB information of the light beam received in the image acquisition step (S105). The RGB information acquisition step (S106) may be configured to acquire the RGB information of the light beam through the three-charge-coupled device (3CCD) of the image sensor 400.

The coordinate system conversion step (S107) may include a step of converting the RGB information acquired in the RGB information acquisition step (S106) into another coordinate system (e.g., the HSV coordinate system or the CIE XYZ coordinate system). The wavelength information confirmation step (S108) may include a step of confirming the wavelength information of the light beam based on the information obtained in the coordinate system conversion step (S107). In the wavelength information confirmation step (S108), the wavelength information of the light beam may be confirmed by using the H value of the HSV coordinate system or the dominant wavelength information of the CIE XYZ coordinate system, as described above.

The three-dimensional shape inspection method (S10) may include a measurement object height confirmation step (S109) of measuring the height of the surface of the measurement object based on the color information detected in the information acquisition step. In the measurement object height confirmation step (S109), the height of the measurement object may be measured by detecting the color information of the light beam focused at and reflected from a position corresponding to a height on the surface of the measurement object 20 among the light beams refracted for each wavelength. The light information detected in the measurement object height confirmation step (S109) may be the information of light beams focused at and reflected from positions corresponding to heights on the surfaces of the base 22 and the transparent material 24 of the measurement object 20.

The three-dimensional shape inspection method (S10) may include a 3D inspection execution step (S110) after the measurement object height confirmation step. The 3D inspection execution step (S110) may include at least one of the aforementioned steps (S101 to S109), and by performing the steps (S101 to S109) multiple times, inspection may be performed on multiple surfaces of the measurement object 20.

The three-dimensional shape inspection method (S10) may include a focus adjustment step for changing the measurement section by vertically changing the positions at which the light beams refracted for each wavelength are focused. The focus adjustment step may be a step in which the measurement section is changed by the focus adjuster 240. The focus adjustment step may be performed before the white light emission step (S101) or before the white light emission step in the 3D inspection execution step (S110), which is performed one or more times. As a result, the focus adjustment step may be repeatedly performed multiple times.

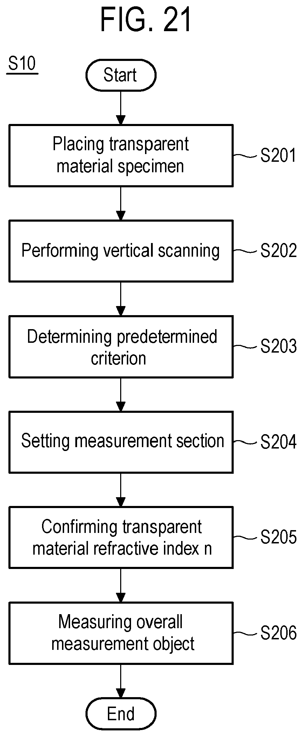

FIG. 21 is a flowchart illustrating a flow of an embodiment of the three-dimensional shape inspection method of the present disclosure in a case where a measurement object includes a transparent material.

The three-dimensional shape inspection method (S10) may include a transparent material specimen placement step (S201), a vertical scanning step (S202), a predetermined criterion determination step (S203), a measurement section setting step (S204), a transparent material refractive index confirmation step (S205), and an overall measurement object measurement step (S206).

The transparent material specimen placement step (S201) may be a step of placing a transparent material 24 on a base 22. The vertical scanning step (S202) may include a focus adjustment step. The vertical scanning step (S202) may be a step of changing the measurement section in the vertical direction by vertically changing the positions where light beams refracted for each wavelength are focused.

The predetermined criterion determination step (S203) may include a first detection step of detecting information on the wavelength of the light beam transmitted in the optical path formation step and a second detection step of detecting information on the wavelength of the light beam reflected in the optical path formation step. One of the first detection step and the second detection step may include a filter detection step of blocking a light beam of a specific wavelength or greater and detecting information on a light beam of a wavelength less than the specific wavelength. The filter detection step may be configured to detect light intensity information.

The predetermined criterion determination step (S203) may be a step of determining whether the light intensity information is equal to or less than a predetermined first specific intensity or equal to or greater than a predetermined second specific intensity. In the predetermined criterion determination step (S203), when the light intensity information is equal to or less than the predetermined first specific intensity or equal to or greater than the predetermined second specific intensity, the vertical scanning step (S202) may be performed again. The predetermined criterion determination step (S203) may include a focus adjustment step of changing the measurement section by vertically changing the positions where the light beams refracted for each wavelength are focused when it is determined that the light intensity information is equal to or less than the predetermined first specific intensity or equal to or greater than the predetermined second specific intensity. When the light intensity information is equal to or less than the predetermined first specific intensity in the predetermined criterion determination step (S203), the focus adjustment step to be performed thereafter may include a step of moving the measurement section downward. When the light intensity information is equal to or greater than the predetermined second specific intensity in the predetermined criterion determination step (S203), the focus adjustment step to be performed thereafter may include a step of moving the measurement section upward.

The measurement section setting step (S204) may be performed when the light intensity information satisfies the predetermined criterion in the predetermined criterion determination step (S203). The predetermined criterion may be a condition in which the light intensity information is equal to or greater than the predetermined first specific intensity and equal to or less than the predetermined second specific intensity. The measurement section setting step (S204) may include a focus adjustment step of changing the measurement section by vertically changing the positions where the light beams refracted for each wavelength are focused when the light intensity information satisfies the predetermined criterion. In the measurement section setting step (S204), after the measurement section is changed, the first detection step and the second detection step may be performed again.

The measurement section setting step (S204) may be configured to acquire first information detected in a no-filter detection step, which is one of the first detection step and the second detection step other than a filter detection step, in a first state before changing the measurement section, and to acquire second information detected in the filter detection step. The measurement section setting step (S204) may be configured to acquire third information detected in the no-filter detection step and fourth information detected in the filter detection step in a second state after changing the measurement section.

The transparent material refractive index confirmation step (S205) may be configured to measure the refractive index n of the transparent material based on the working distance in the first state, the working distance in the second state, the first information, and the third information. The refractive index n measurement method in the transparent material refractive index confirmation step (S205) may be performed in the same manner as the refractive index measurement method in the three-dimensional shape inspection device 10.

The total measurement object measurement step (S206) may be configured to measure the height of the base of the measurement object and the height of the transparent material disposed on the base based on the first information, the second information, the third information, the fourth information obtained in the measurement section setting step (S204), and the refractive index measured in the transparent material refractive index confirmation step (S205).

Although the technical spirit of the present disclosure has been described by the examples described in some embodiments and illustrated in the accompanying drawings, it should be noted that various substitutions, modifications, and changes can be made without departing from the scope of the present disclosure which can be understood by those skilled in the art to which the present disclosure pertains. In addition, it should be noted that that such substitutions, modifications and changes are intended to fall within the scope of the appended claims.

**Claims**

1. A three-dimensional shape inspection device comprising:

   a light emitter including a light source and a spatial light modulator configured to modulate light received from the light source, the light emitter being configured to emit multiple light beams having multiple focal points downward onto a surface of a measurement object;
   an optical system configured to refract respective modulated light beams at different refractive indices for each of multiple wavelengths based on chromatic aberration, thereby forming a measurement section in a vertical direction in which the light refracted for each wavelength is focused;
   a beam splitter configured to transmit a part of light reflected from the measurement object and to reflect another part of the light reflected from the measurement object;
   a first detector configured to detect information on a wavelength of the light transmitted through the beam splitter; and
   a second detector configured to detect information on a wavelength of the light reflected by the beam splitter, wherein a filter detector, which is one of the first detector and the second detector, comprises a filter unit configured to block light at a specific wavelength or longer, thereby detecting information on light of a wavelength less than the specific wavelength.

2. The three-dimensional shape inspection device of claim 1, further comprising:
   a controller configured to measure a height of a base of the measurement object and a height of a transparent material disposed on the base based on information detected by the first detector and information detected by the second detector.

3. The three-dimensional shape inspection device of claim 1, wherein the filter detector is configured to detect light intensity information.

4. The three-dimensional shape inspection device of claim 3, further comprising:

   a focus adjuster configured to change the measurement section by vertically changing the positions where the light beams refracted for each wavelength are focused; and
   a controller configured to control the focus adjuster to change the measurement section when the determining the light intensity information to be equal to or less than a predetermined first specific intensity.

5. The three-dimensional shape inspection device of claim 4, wherein the controller is configured to control the focus adjuster to change the measurement section so that light of a shorter wavelength is reflected from the measurement object when determining the light intensity information to be equal to or less than the predetermined first specific intensity.

**6.** The three-dimensional shape inspection device of claim 3, further comprising:

a focus adjuster configured to change the measurement section by vertically changing the positions where the light beams refracted for each wavelength are focused; and

a controller configured to control the focus adjuster to change the measurement section when determining the light intensity information to be equal to or greater than a predetermined second specific intensity.

**7.** The three-dimensional shape inspection device of claim 6, wherein the controller is configured to control the focus adjuster to change the measurement section so that light of a longer wavelength is reflected from the measurement object when determining the light intensity information to be equal to or greater than the predetermined second specific intensity.

**8.** The three-dimensional shape inspection device of claim 3, further comprising:

a focus adjuster configured to change the measurement section by vertically changing the positions where the light beams refracted for each wavelength are focused; and

a controller configured to control the focus adjuster to change the measurement section when the light intensity information satisfies a predetermined criterion,

wherein the first detector and the second detector are configured to detect information on the wavelength of light again in a state in which the measurement section is changed.

**9.** The three-dimensional shape inspection device of claim 8, wherein the controller is configured to:

(i) acquire first information detected by a no-filter detector which is one of the first detector and the second detector other than the filter detector, and second information detected by the filter detector in a first state before changing the measurement section;

(ii) acquire third information detected by the no-filter detector and fourth information detected by the filter detector in a second state after changing the measurement section; and

(iii) measure a height of the base of the measurement object and a height of the transparent material disposed on the base based on the first information, the second information, the third information, and the fourth information.

**10.** The three-dimensional shape inspection device of claim 9, wherein, when a working distance is defined as a value proportional to an average distance from the optical system to the positions where the light beams refracted for each wavelength are focused, the controller is configured to measure a refractive index of the transparent material based on the working distance in the first state, the working distance in the second state, the first information, and the third information.

**11.** The three-dimensional shape inspection device of claim 9, wherein the optical system has unique focal shifts for each wavelength due to chromatic aberration, and

wherein, when a working distance is defined as a value proportional to an average distance from the optical system to the positions where the light beams refracted for each wavelength are focused, the controller is configured to measure a refractive index, which is a value obtained by dividing a value obtained by subtracting the working distance in the second state from the working distance in the first state by a value obtained by subtracting a first focal shift corresponding to the first information from a third focal shift corresponding to the third information.

**12.** The three-dimensional shape inspection device of claim 11, wherein the controller is configured to measure the height of the base of the measurement object and the height of the transparent material disposed on the base based on the first information, the second information, the third information, the fourth information, and the refractive index.

**13.** The three-dimensional shape inspection device of claim 11, wherein the focus adjuster comprises a variable lens configured to change the measurement section based on an applied current, and as the applied current increases, the value obtained by subtracting the working distance in the second state from the working distance in the first state increases.

**14.** The three-dimensional shape inspection device of claim 1, wherein the filter detector is the second detector.

**15.** The three-dimensional shape inspection device of claim 1, wherein the spatial light modulator is configured to modulate light received from the light source by reflecting the light, and comprises multiple digital micromirror devices arranged in an array.

16. The three-dimensional shape inspection device of claim 1, wherein the first detector and the second detector are configured to detect color information of a light beam focused at and reflected from a position corresponding to a height of the base of the measurement object or a height of the transparent material disposed on the base among the light beams refracted for each wavelength.

17. The three-dimensional shape inspection device of claim 1, wherein the light emitter is configured to emit the multiple light beams having multiple focal points downward onto the surface of the measurement object in a horizontal direction perpendicular to the vertical direction.

18. A method for inspecting a three-dimensional shape, the method comprising:

a light modulation step of modulating light received from a light source to emit multiple light beams having multiple focal points onto a surface of a measurement object;
a light emission step of refracting each of the modulated light beams at different refractive indices for each of multiple wavelengths based on chromatic aberration, thereby emitting the modulated light beams downward to form a measurement section in a vertical direction, in which the light beams refracted for each of multiple wavelengths are focused;
an optical path formation step of transmitting a part of the light reflected from the measurement object and reflecting another part of the light reflected from the measurement object by a beam splitter;
a first detection step of detecting information on the wavelength of the light transmitted in the optical path formation step; and
a second detection step of detecting information on the wavelength of the light reflected in the optical path formation step,
wherein one of the first detection step and the second detection step comprises a filter detection step of blocking light of a specific wavelength or greater and detecting information on light of a wavelength less than the specific wavelength.

19. The method of claim 18, wherein the filter detection step is configured to detect light intensity information, and wherein the method further comprises:
a focus adjustment step of changing the measurement section by vertically changing the positions where the light beams refracted for each wavelength are focused when it is determined that the light intensity information is equal to or less than a predetermined first specific intensity or equal to or greater than a predetermined second specific intensity.

20. The method of claim 18, wherein the filter detection step is configured to detect light intensity information, and wherein the method further comprises:

a focus adjustment step of changing the measurement section by vertically changing the positions where the light beams refracted for each wavelength are focused when the light intensity information satisfies a predetermined criterion, and
wherein the first detection step and the second detection step are performed again in a state in which the measurement section is changed.

# FIG. 1

# FIG. 2

# FIG. 3

# FIG. 4

(a)  (b)  (c)

EP 4 597 027 A1

# FIG. 5

# FIG. 6

# FIG. 7

on    off              DMD

# FIG. 8

CCD pixel

# FIG. 9

# FIG. 10

FIG. 11

## FIG. 12

## FIG. 13

EP 4 597 027 A1

## FIG. 14

(a)

(b)

(c)

# FIG. 15

(a)    (b)    (c)

FIG. 16

(a)

(b)

(c)

EP 4 597 027 A1

EP 4 597 027 A1

# FIG. 17

(a)  (b)  (c)

# FIG. 18

(a)

(b)

EP 4 597 027 A1

FIG. 19

[Chromatic Focal Shift]

# FIG. 20

S10

Start

S101 — Emitting white light

S102 — Performing DLP multiple pattern irradiation

S103 — Performing measurement object irradiation

S104 — Reflecting wavelength signal corresponding measurement object height

S105 — Acquiring image

Acquiring RGB information — S106

Converting coordinate system — S107

Confirming wavelength information — S108

Confirming measurement object height — S109

Performing 3D inspection — S110

End

# FIG. 21

<u>S10</u>

```
            ( Start )
                │
                ▼
    ┌───────────────────────┐
    │  Placing transparent  │ ── S201
    │   material specimen   │
    └───────────────────────┘
                │
                ▼
    ┌───────────────────────┐
    │ Performing vertical   │ ── S202
    │      scanning         │
    └───────────────────────┘
                │
                ▼
    ┌───────────────────────┐
    │ Determining           │ ── S203
    │ predetermined         │
    │     criterion         │
    └───────────────────────┘
                │
                ▼
    ┌───────────────────────┐
    │ Setting measurement   │ ── S204
    │      section          │
    └───────────────────────┘
                │
                ▼
    ┌───────────────────────┐
    │ Confirming transparent│ ── S205
    │ material refractive   │
    │     index n           │
    └───────────────────────┘
                │
                ▼
    ┌───────────────────────┐
    │  Measuring overall    │ ── S206
    │  measurement object   │
    └───────────────────────┘
                │
                ▼
             ( End )
```

## INTERNATIONAL SEARCH REPORT

| International application No. |
| --- |
| **PCT/KR2023/001246** |

**A. CLASSIFICATION OF SUBJECT MATTER**

**G01B 11/24**(2006.01)i; **G01B 11/06**(2006.01)i; **G01N 21/17**(2006.01)i; **G01N 21/64**(2006.01)i; **G02B 21/00**(2006.01)i

According to International Patent Classification (IPC) or to both national classification and IPC

**B. FIELDS SEARCHED**

Minimum documentation searched (classification system followed by classification symbols)

G01B 11/24(2006.01); G01B 11/00(2006.01); G02B 21/00(2006.01); G02B 21/02(2006.01); G02F 1/13(2006.01); H01L 21/027(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공초점(confocal), 높이(height), 공간 광 변조기(spatial light modulator), 초점(focal point), 필터(filter)

**C. DOCUMENTS CONSIDERED TO BE RELEVANT**

| Category* | Citation of document, with indication, where appropriate, of the relevant passages | Relevant to claim No. |
| --- | --- | --- |
| Y | US 2018-0164562 A1 (BYEON et al.) 14 June 2018 (2018-06-14)<br>See abstract, paragraphs [0039]-[0066] and figures 5, 7 and 12. | 1-8,14-20 |
| A | | 9-13 |
| Y | JP 2015-504178 A (TAYLOR HOBSON LIMITED) 05 February 2015 (2015-02-05)<br>See paragraphs [0023]-[0035] and figure 2. | 1-8,14-20 |
| Y | JP 2000-241113 A (NEC CORP.) 08 September 2000 (2000-09-08)<br>See paragraphs [0017]-[0019], claims 2 and 4 and figure 1. | 4-8,19,20 |
| A | JP 2007-187945 A (YOKOGAWA ELECTRIC CORP.) 26 July 2007 (2007-07-26)<br>See paragraphs [0029]-[0039] and figure 1. | 1-20 |
| A | KR 10-2005-0102323 A (NARAENANOTECH CORPORATION) 26 October 2005 (2005-10-26)<br>See paragraphs [0019]-[0030] and figure 2. | 1-20 |

☐ Further documents are listed in the continuation of Box C.　　☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **26 June 2023** | **26 June 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/001246**

| Patent document cited in search report | | | Publication date (day/month/year) | Patent family member(s) | | | Publication date (day/month/year) |
|---|---|---|---|---|---|---|---|
| US | 2018-0164562 | A1 | 14 June 2018 | | None | | |
| JP | 2015-504178 | A | 05 February 2015 | EP | 2795246 | A2 | 29 October 2014 |
| | | | | GB | 2497792 | A | 26 June 2013 |
| | | | | US | 2014-0347660 | A1 | 27 November 2014 |
| | | | | WO | 2013-093459 | A2 | 27 June 2013 |
| | | | | WO | 2013-093459 | A3 | 09 January 2014 |
| JP | 2000-241113 | A | 08 September 2000 | JP | 3264263 | B2 | 11 March 2002 |
| JP | 2007-187945 | A | 26 July 2007 | JP | 4867354 | B2 | 01 February 2012 |
| KR | 10-2005-0102323 | A | 26 October 2005 | | None | | |

Form PCT/ISA/210 (patent family annex) (July 2022)